# EUROPEAN PATENT SPECIFICATION

(11) **EP 4 574 856 B1**
(45) Date of publication and mention of the grant of the patent: **16.09.2026**
(21) Application number: 23219148.6
(22) Date of filing: 21.12.2023
(51) Int. Cl.: C08F 255/02, C08J 5/18, C08F 8/00

(54) **MODIFICATION PROCESS FOR POLYETHYLENE RECYCLATES**
VERFAHREN ZUR MODIFIZIERUNG VON POLYETHYLENRECYCLATEN
PROCÉDÉ DE MODIFICATION DE RECYCLATS DE POLYÉTHYLÈNE

(43) Date of publication of application: 25.06.2025
(73) Proprietor: Borealis GmbH, 1020 Vienna (AT)
(72) Inventor: WANG, Jingbo, 4021 Linz (AT); FAWAZ, Joel, 4021 Linz (AT); BORAGNO, Luca, 4021 Linz (AT); MAYR, Michael, 4021 Linz (AT)
(74) Representative: Kador & Partner Part mbB

(56) References cited:
- EP-A1- 4 036 130
- EP-A1- 4 279 538
- US-A1- 2023 114 045

## Description

The present invention is directed to a process for modifying a mixed-plastic-polyethylene recycling blend to reduce its gel content and crosslinking content. The present invention is also directed to a modified mixed-plastic-polyethylene recycling blend obtained by the process, as well as to a film comprising the modified mixed-plastic-polyethylene recycling blend.

### Background of the Invention

The challenge of disposal of accumulated plastic waste and corresponding environmental issues have received widespread attention from the public and professionals. Therefore, recycling of plastic material has become an important topic, where plastic waste can be turned into resources for new plastic products. Hence, environmental and economic aspects can be combined in recycling and reusing plastic material.

Although recycling of plastic material has already begun in the mid-90s by implementing collection systems, which allow more target orientated collection and separation of plastic materials from other household waste materials, the reuse of plastic material originating from plastic waste is still limited. Waste plastics (e.g., post-consumer recyclate (PCR)) generally contain mixtures of different plastics and several contaminant materials. These mixtures would usually need extensive mechanical recycling (i.e., material sorting and cleaning) prior to further preparation or use. The employed modification methods are often limited to the use of relatively homogeneous plastic materials with a low content of contaminants. Thus, already established methods for modification of homogeneous plastic materials, and, in particular of virgin polymers, cannot be applied.

Moreover, these methods often do not provide recycled plastic materials with the required properties to be used in a wide range of applications.

However, there is a general need for further modification methods of waste plastic materials, in particular, post-consumer recyclate.

Polyolefins such as polyethylenes are often used in films. Besides mechanical requirements on polyethylenes for film applications, a low content of gel is important. The presence of gels is a common problem in polyolefins. The term "gel" generally refers to highly localized imperfections in the polyolefin, especially film made from polyolefin, that are visually distinct from the surrounding film, mostly due to the presence of either high concentrations of unblended polymer, unreacted catalyst and activator, or both, but can include other types of visually distinct imperfections as well. The less homogeneous films are characterized by a higher film thickness distribution. The presence of gels lowers the value of these films, and in some cases makes the films unmarketable. Especially recyclates are often characterized by a rather high gel content. Thus, there is a need in the art for methods for reducing the gel content of polyolefin recyclates.

There are methods known in the art for reducing the gel content in virgin polyolefins. Many of these methods rely on filtering a polyolefin melt. For example, US 7,393,916 suggests passing the polyolefin through one active screen filter having a mesh size of from 70 to 200 micron.

However, there is a general need for methods for gel reduction in polyolefin recyclates, and in particular in polyethylene recyclates with low density intended for film applications.

Polyolefin recyclates are also characterized by a relatively high crosslinking content (i.e., content of crosslinked polymeric material), which may occur due to the presence of impurities in the recyclates. So far, there is a limited number of solutions available to reduce the crosslinking content. However, crosslinked material may have the same negative impact on films as described for the gel content.

EP4279538 discloses a method for modifying a post-consumer recycled polyolefin composition comprising the steps of providing a post-consumer recycled polyolefin; adding 0.10 to 1.50 wt.-%, of a radical initiator and optionally mixing the components to form a mixture; adding 0.05 to 0.50 wt.-%, of a twofold unsaturated hydrocarbon compound; extruding the mixture (2) at a temperature in the range of from 180 to 300 °C to obtain a modified polyolefin composition.

Thus, there is a need in the art for methods for reducing the content of crosslinked material.

The modification methods should further not negatively influence other properties of the polyolefin recyclate, such as in particular mechanical properties that may make the modified polyolefin recyclate not suitable for film applications.

### Summary of the Invention

The objective of the present invention is to provide a process that addresses the above-described issues and to provide the respectively modified polyolefins. Accordingly, the present invention provides a process for modifying a mixed-plastic-polyethylene recycling blend comprising the following steps:
I) providing a mixed-plastic-polyethylene recycling blend (PERB) having
   i.1) a melt flow rate MFRs (ISO 1133, 190 °C, 5 kg) in the range of from 0.5 to 10.0 g/10 min,
   i.2) a ratio of melt flow rates MFR₂₁/MFR₅ (ISO 1133, 190 °C, 21.6 kg and 5 kg) of more than 10,
   i.3) a density (ASTM D 792) in the range of from 915 to 939 kg/m³, and
   i.4) a total amount of ethylene units (C₂ units), based on the total weight of monomer units in the mixed-plastic-polyethylene recycling blend (PERB) and measured according to quantitative ¹³C{¹H} NMR as described herein below, in the range of from 80.0 to 96.0 wt.-%,
(II) adding 100 to 10,000 ppm of a poly(n)functional acrylate compound with n ≥ 2, relative to the total weight of the mixed-plastic-polyethylene recycling blend (PERB), and
(III) compounding the mixed-plastic-polyethylene recycling blend (PERB) and the poly(n)functional acrylate compound to obtain a modified mixed-plastic-polyethylene recycling blend (modified PERB),
wherein the modified mixed-plastic-polyethylene recycling blend (modified PERB) has a relative xylene hot insoluble content (R_{XHU}) in the range of from 0.05 to 1.00, determined as described herein below and indicated as ${R}_{XHU} = 1 - \frac{XHU \left(modified PERB\right)}{XHU \left(PERB\right)} ,$ wherein XHU(modified PERB) is the xylene hot insoluble content of the modified mixed-plastic-polyethylene recycling blend (modified PERB) and XHU(PERB) is the xylene hot insoluble content of the mixed-plastic-polyethylene recycling blend (PERB) provided in step (I).

The present process enables modification of a mixed-plastic-polyethylene recycling blend to provide a modified mixed-plastic-polyethylene recycling blend having a reduced content of crosslinking, i.e., of crosslinked material as defined by the relative xylene hot insoluble content (R_{XHU}). Reduction of crosslinking by a poly(n)functional acrylate compound was fully surprising since acrylates are known crosslinking agents.

This modified mixed-plastic-polyethylene recycling blend is also characterized by a reduced total gel content.

The present invention also provides a modified polyolefin mixed-plastic-polyethylene recycling blend obtained by the process, as well as a film comprising the modified mixed-plastic-polyethylene recycling blend.

Films comprising the modified polyolefin mixed-plastic-polyethylene recycling blend are very homogeneous, as is indicated by a lower film thickness distribution. Moreover, the films have a good and comparatively high stiffness to films with the same but unmodified recyclates.

### Detailed Description of the Invention

The present invention provides a process for modifying a mixed-plastic-polyethylene recycling blend to obtain a respectively modified mixed-plastic-polyethylene recycling blend characterized by a low content of crosslinked material and gels.

For the purposes of the present description and of the subsequent claims, the term "mixed-plastic-polyethylene recycling blend (PERB)" indicates a polymer material that originates from recycled waste. Thus, the mixed-plastic-polyethylene recycling blend refers to objects having completed at least a first use cycle (or life cycle), i.e., having already served their first purpose. In contrast, the term "virgin" as used herein denotes the newly produced materials and/or objects prior to their first use, and which have not already been recycled.

### Step (I) - Provision of a mixed-plastic-polyethylene recycling blend (PERB)

In step (I) of the process of the present invention, a mixed-plastic-polyethylene recycling blend (PERB) is provided.

The term "mixed-plastic-polyethylene recycling blend (PERB)" indicates a polymer material that originates from recycled waste. The mixed-plastic-polyethylene recycling blend can be obtained from a post-consumer waste stream and/or a post-industrial waste stream.

In a preferred embodiment, the recycled waste is a post-consumer recycled waste (i.e., the PERB is a post-consumer recyclate). This waste may originate from conventional collecting systems such as those implemented in the European Union. Thus, the mixed-plastic-polyethylene recycling blend, preferably post-consumer recyclate, has already completed at least a first use cycle (or life cycle), i.e., having already served its first purpose.

Recycled polyethylene is different from virgin polyethylene, i.e., a newly produced material, which has not already been used and recycled. Post-consumer recyclate is different from industrial waste, i.e., manufacturing scrap, which does normally not reach a consumer.

Virgin materials and used and/or recycled materials (such as mechanically recycled polymers) can easily be differentiated based on the absence or presence of contaminants such as limonene, fatty acids, paper and/or wood and other contaminants, or generally on their ash content. Polyethylenes can further be differentiated with respect to the materials' origin by the possible presence of non-polyethylene or non-polyolefin polymers such as polystyrene and/or polyamide.

Recycled polyethylene, such as the mixed-plastic-polyethylene recycling blend, is characterized by presence of limonene, usually in the content of from 0.1 to 500 mg/kg (= ppm; as determined using solid phase microextraction (HS-SPME-GC-MS) by standard addition).

According to the present invention the mixed-plastic-polyethylene recycling blend (PERB) is generally a blend, wherein at least 90 wt.-%, preferably at least 95 wt.-%, more preferably 100 wt.-% of the mixed-plastic-polyethylene recycling blend (PERB) originate from post-consumer waste, such as from conventional collecting systems (curb-side collection), e.g., those implemented in the European Union, and/or post-industrial waste, preferably from post-consumer waste.

The mixed-plastic-polyethylene recycling blend (PERB) generally includes predominantly units derived from ethylene apart from other polymeric ingredients of arbitrary nature. Such polymeric ingredients may for example originate from monomer units derived from alpha olefins such as propylene, 1-butene, 1-hexene, 1-octene, and the like, styrene derivatives such as vinyl styrene, substituted and unsubstituted acrylates or substituted and unsubstituted methacrylates.

Said polymeric materials can be identified in the mixed-plastic polyethylene recycling blend by means of quantitative ¹³C{¹H} **NMR** measurements as described herein below. With the quantitative ¹³C{¹H} **NMR** measurement, different units in the polymeric chain can be distinguished and quantified. These units are ethylene units (i.e., ethylene-derived C₂ units), units having 3, 4 and 6 carbons and units having 7 carbon atoms. Thereby, the units having 3 carbon atoms (C₃ units) can be distinguished in the **NMR** spectrum as isolated C₃ units (isolated C₃ units) and as continuous C₃ units (continuous C₃ units) which indicate that the polymeric material contains a propylene-based polymer. These continuous C₃ units can also be identified as iPP units.

The units having 3, 4, 6 and 7 carbon atoms describe units in the NMR spectrum which are derived from two carbon atoms in the main chain of the polymer and a short side chain or branch of 1 carbon atom (isolated C₃ unit), 2 carbon atoms (C₄ units), 4 carbon atoms (C₆ units) or 5 carbon atoms (C₇ units).

The units having 3, 4 and 6 carbon atoms (isolated C₃, C₄ and C₆ units) can derive either from incorporated comonomers (propylene, 1-butene and 1-hexene comonomers) or from short chain branches formed by radical polymerization.

The units having 7 carbon atoms (C₇ units) can be distinctively attributed to the mixed-plastic-polyethylene recycling blend as they cannot derive from any comonomers. 1-heptene monomers are not used in copolymerization. Instead, the C₇ units represent presence of LDPE distinct for the recyclate. It has been found that in LDPE resins the amount of C₇ units is always in a distinct range. Thus, the amount of C₇ units measured by quantitative ¹³C{¹H} NMR measurements can be used to calculate the amount of LDPE in a polyethylene composition.

Thus, the amounts of continuous C₃ units, isolated C₃ units, C₄ units, C₆ units and C₇ units are measured by quantitative ¹³C{¹H} NMR measurements as described below, whereas the LDPE content is calculated from the amount of C₇ units as described below.

The total amount of ethylene units (C₂ units) is attributed to units in the polymer chain, which do not have short side chains of 1-5 carbon atoms, in addition to the units attributed to the LDPE (i.e., units which have longer side chains branches of 6 or more carbon atoms).

Conventionally, further components such as fillers, including organic and inorganic fillers for example talc, chalk, carbon black, and further pigments such as TiO₂ as well as paper and cellulose may be present in the mixed-plastic-polyethylene recycling blend.

This process employs a mixed-plastic-polyethylene recycling blend (PERB) with the following properties:
i.1) a melt flow rate MFRs (ISO 1133, 190 °C, 5 kg) in the range of from 0.5 to 10.0 g/10 min, preferably from 0.7 to 7.0 g/10 min, more preferably from 1.0 to 5.0 g/10 min;
i.2) a ratio of melt flow rates MFR₂₁/MFR₅ (ISO 1133, 190 °C, 21.6 kg and 5 kg) of more than 10, preferably in the range of from 11 to 30, more preferably from 12 to 25;
i.3) a density (ASTM D 792) in the range of from 915 to 939 kg/m³, preferably from 918 to 935 kg/m³, more preferably from 920 to 930 kg/m³; and
i.4) a total amount of ethylene units (C₂ units), based on the total weight of monomer units in the mixed-plastic-polyethylene recycling blend (PERB) and measured according to quantitative ¹³C{¹H} **NMR** as described herein below, in the range of from 80.0 to 96.0 wt.-%, preferably from 82.5 to 95.5 wt.-%, more preferably from 85.0 to 95.5 wt.-% and most preferably from 87.5 to 95.0 wt.-%.

Preferably, the mixed-plastic-polyethylene recycling blend (PERB) comprises a total amount of continuous units having 3 carbon atoms corresponding to polypropylene (continuous C₃ units) in the range of from 0.2 to 6.5 wt.-%, more preferably from 0.4 to 6.0 wt.-%, still more preferably from 0.6 to 5.5 wt.-% and most preferably from 0.75 to 5.0 wt.-%.

In addition to C₂ units and continuous C₃ units the mixed-plastic-polyethylene recycling blend (PERB) can further comprise units having 3, 4, 6 or 7 or more carbon atoms, i.e., the mixed-plastic-polyethylene recycling blend (PERB) overall can comprise ethylene-derived units and a mix of units having 3, 4, 6 and 7 or more carbon atoms.

In some embodiments, the mixed-plastic-polyethylene recycling blend (PERB) preferably comprises one or more in any combination, preferably all of:
a) a total amount of units having 3 carbon atoms as isolated C₃ units (isolated C₃ units) in the range of from 0.00 to 0.50 wt.-%, more preferably from 0.00 to 0.40 wt.-%, still more preferably from 0.00 to 0.30 wt.-% and most preferably from 0.00 to 0.25 wt.-%;
b) a total amount of units having 4 carbon atoms (C₄ units) in the range of from 0.50 to 5.00 wt.-%, more preferably from 0.75 to 4.00 wt.-%, still more preferably from 1.00 to 3.50 wt.-% and most preferably from 1.25 to 3.00 wt.-%;
c) a total amount of units having 6 carbon atoms (C₆ units) in the range of from 0.50 to 7.50 wt.-%, more preferably from 0.75 to 6.50 wt.-%, still more preferably from 1.00 to 5.50 wt.-% and most preferably from 1.25 to 5.00 wt.-%;
d) a total amount of units having 7 carbon atoms (C₇ units) in the range of from 0.20 to 2.50 wt.-%, more preferably from 0.30 to 2.00 wt.-%, still more preferably from 0.40 to 1.50 wt.-% and most preferably from 0.45 to 1.25 wt.-%, and
e) an LDPE content in the range of from 20.0 to 65.0 wt.-%, more preferably from 25.0 to 62.5 wt.-%, still more preferably from 30.0 to 60.0 wt.-% and most preferably from 32.0 to 55.0 wt.-%.

The total amounts of C₂ units, continuous C₃ units, isolated C₃ units, C₄ units, C₆ units, C₇ units and LDPE content are based on the total weight of monomer units in the mixed-plastic-polyethylene recycling blend (PERB) and are measured and calculated according to quantitative ¹³C{¹H} NMR measurement, as described herein.

Preferably, the total amount of units, which can be attributed to comonomers (i.e., isolated C₃ units, C₄ units and C₆ units), in the mixed-plastic-polyethylene recycling blend (PERB) is in the range of from 4.00 to 20.00 wt.-%, more preferably from 4.50 to 17.50 wt.-%, still more preferably from 4.75 to 15.00 wt.-% and most preferably from 5.00 to 12.50 wt.-%.

In one embodiment, the mixed-plastic-polyethylene recycling blend (PERB) does not comprise carbon black. In another embodiment, the mixed-plastic-polyethylene recycling blend (PERB) does not comprise any pigments other than carbon black.

In preferred embodiments, the mixed-plastic-polyethylene recycling blend (PERB) is a natural mixed-plastic-polyethylene recycling blend (PERB), i.e., no pigments (including carbon black) are included in the components of the mixed-plastic-polyethylene recycling blend.

**In** some embodiments, the mixed-plastic-polyethylene recycling blend (PERB) comprises, based on the total weight of the mixed-plastic-polyethylene recycling blend (PERB), one or more of
a) from 0.1 to 500 ppm, preferably from 0.1 to 100 ppm, more preferably from 0.1 to 50 ppm, even more preferably from 0.1 to 20 ppm, most preferably from 0.1 to 5 ppm, of limonene, determined by solid phase microextraction (HS-SPME-GC-MS);
b) from 0.1 to 100 ppm of fatty acids, determined by solid phase microextraction (HS-SPME-GC-MS);
c) from 0.1 to 10 wt.-% of non-polyolefin polymers, determined by **FTIR** spectroscopy;
d) from 0.1 to 10 wt.-% of other components, selected from talc, chalk, carbon, calcium stearate, titanium dioxide, pigments, metals, glass, paper, wood and combinations thereof, determined as described herein below. The percentage refers to the sum of these components.

The components a) to d) above may serve to distinguish the mixed-plastic-polyethylene recycling blend used as starting material for the process of the present invention from virgin polyethylenes.

**In** some embodiments, the mixed-plastic-polyethylene recycling blend (PERB) comprises at least limonene in a content of at least 0.1 ppm.

The mixed-plastic-polyethylene recycling blend (PERB) may also comprise a residual ash content, as determined according to the ISO 3451-1 (1997) standard, of below 3.0 wt.-%, preferably in the range of from 0.5 to 2.7 wt.-% and more preferably 0.7 to 2.5 wt.-%.

**In** some embodiments, the mixed-plastic-polyethylene recycling blend (PERB) comprises, preferably consists of:
a) from 80.0 to 96.0 wt.-% of units derived from ethylene,
b) 0 to 10.0 wt.-% of units derived from alpha olefin(s) other than ethylene,
c) 0 to 3.0 wt.-% of stabilizers,
d) 0 to 3.0 wt.-% of talc,
e) 0 to 3.0 wt.-% of chalk, and
f) 0 to 6.0 wt.-% of further components different from those in a) to e),
wherein all percentages are based on the total weight of the mixed-plastic-polyethylene recycling blend (PERB). The determination methods are described herein below, wherein TGA is preferably used for the determination of talc and chalk.

The process of the present invention is tolerant to the cited components in the indicated amounts, and the modified mixed-plastic-polyethylene recycling blend (modified PERB) obtained by the process is of excellent quality for further reuse.

Preferably, the mixed-plastic-polyethylene recycling blend (PERB) has a melt flow rate MFR₂ (ISO 1133, 2.16 kg, 190 °C) in the range of from 0.1 to 1.5 g/10 min, more preferably from 0.2 to 1.3 g/10 min; and/or a melt flow rate MFR₂₁ (ISO 1133, 21.6 kg, 190 °C) in the range of from 20.0 to 50.0 g/10 min, more preferably from 25.0 to 45.0 g/10 min.

The mixed-plastic-polyethylene recycling blend (PERB) further preferably has one or more, more preferably all, of the following properties in any combination:
a) a polydispersity index PI in the range of from 1.0 to 3.5 s⁻¹, more preferably from 1.3 to 3.0 s⁻¹ ;
b) a shear thinning index SHI_{2.7/210} in the range of from 15 to 40, more preferably from 20 to 35;
c) a complex viscosity at the frequency of 300 rad/s, eta300, in the range of from 500 to 750 Pa · s, more preferably from 550 to 700 Pa · s;
d) a complex viscosity at the frequency of 0.05 rad/s, eta0.05, in the range of from 15000 to 30000 Pa · s, more preferably from 15500 to 27500 Pa · s; and
e) a strain hardening modulus, SH modulus, in the range of from 12.5 to 20.0 MPa, more preferably from 13.0 to 17.5 MPa.

The determination methods used for these parameters are described herein below.

The mixed-plastic-polyethylene recycling blend (PERB) preferably has a gel index (GI) of not more than 5000, more preferably not more than 4000. The lower limit of the gel index (GI) is usually 100, preferably 150. The gel index is determined as described herein below.

Mixed-plastic-polyethylene blend(s) (PERB) as used herein are commercially available. Suitable recyclates are e.g., available from Ecoplast Kunststoffrecycling GmbH under the brand names NAV 101 and NAV 102.

The mixed-plastic-polyethylene recycling blend may generally be present in the form of particles or pieces, which are not limited by their geometry, as long as they contain enough surface for the reaction in step (I). However, preferably, the mixed-plastic-polyethylene recycling blend is present in pellet form. Preferably, the pellets have a median thickness T50, determined by direct caliper measurement, in the range of from 0.5 to 5.0 mm, more preferably in the range of from 0.8 to 3.5 mm. The pellets preferably are cylindrical or lens-shaped having a median diameter D50, determined by optical analysis using a high-speed camera, in the range of from 2.0 to 5.0 mm, preferably in the range of from 2.5 to 4.5 mm.

The mixed-plastic-polyethylene recycling blend (PERB) as required by the present invention may be prepared from pre-blends based recyclates with other contents or forms. For example, post-consumer polymeric waste may be treated by different mechanical (e.g., sorting) processes, washing or chemical (e.g., dissolving) processes, in order to provide the mixed-plastic-polyethylene recycling blend to be used in the process of the present invention.

In particular, the mixed-plastic-polyethylene recycling blend may be provided in the desired size and form by extrusion at 150 to 250 °C, preferably from 160 to 240 °C, in a single- or twin-screw extruder, preferably a co-rotating twin-screw extruder, followed by a suitable pelletization process, in which the pellet thickness and diameter are defined. Suitable pelletization processes include underwater pelletization, water-ring pelletization and strand pelletization, the latter comprising solidification of one or more melt strands in a water bath followed by cutting the strand into pellets. In all cases, the pellet diameter is defined by the die diameter and the pellet length by the cutting frequency used in pelletization.

Generally, provision of the mixed-plastic-polyethylene recycling blend in step (I) means that this composition is made available. The mixed-plastic-polyethylene recycling blend may be provided by already placing the blend in a reactor, where the poly(n)functional acrylate compound is then added. However, the blend may also be added to a reactor concurrently to the addition of a poly(n)functional acrylate compound of step (II).

Typically, the mixed-plastic-polyethylene recycling blend of step (I) may be provided at a temperature of from -20 to 90 °C, such as from 15 to 90 °C, particularly from 15 to 25 °C.

Optionally, the mixed-plastic-polyethylene recycling blend of step (I) may be melted prior to step (II), for example at 150 to 250 °C, preferably from 160 to 240 °C.

### Step (II) - Addition of poly(n)functional acrylate compound

**In** step (II) of the process of the present invention, a poly(n)functional acrylate compound with n ≥ 2 is added to the mixed-plastic-polyethylene recycling blend (PERB).

The poly(n)functional acrylate compound is added in an amount of from 100 to 10,000 ppm, preferably from 500 to 8,000 ppm, more preferably from 800 to 6,000 ppm and most preferably from 1,000 to 5,000 ppm, relative to the total weight of the mixed-plastic-polyethylene recycling blend (PERB). The temperature of the poly(n)functional acrylate compound in step (II) will generally correspond to the temperature of step (I).

The term "poly(n)functional acrylate compound" indicates a compound having n acrylate and/or methacrylate functionalities. n is ≥ 2, meaning that 2 or more acrylate and/or methacrylate functionalities are present in the compound. Preferably, n is an integer of from 2 to 10, more preferably from 2 to 6. **In** some preferred embodiments, n is 2 or 3.

The poly(n)functional acrylate compound may be selected from any poly(n)functional acrylate compound suitable for applications for polyethylene polymers. Preferably, the poly(n)functional acrylate compound is a di- or tri-(meth)acrylate.

Preferred di- or tri-(meth)acrylate is selected from the group consisting of 1,4-butanediol-dimethacrylate (BDDMA), 1,6-hexanediol-dimethacrylate (HDDMA), 1,3-butyleneglycol-dimethacrylate (BGDMA), ethyleneglycol-dimethacrylate (EGDMA), dodecanediol-dimethacrylate (DDDMA), trimethylolpropane-trimethacrylate (TMPTMA), trimethylolpropane-triacrylate (TMPTA) and combinations thereof, trimethylolpropane-trimethacrylate (TMPTMA) and/or trimethylolpropane-triacrylate (TMPTA) being most preferred.

**In** some embodiments, the poly(n)functional acrylate compound is added to the mixed-plastic-polyethylene recycling blend (PERB) contained in a reactor, or it is added to a reactor concurrently with the addition of the mixed-plastic-polyethylene recycling blend (PERB).

**In** one embodiment, the reactor is a flow-through reactor, such as a horizontal mixer with paddle stirrer, preferably in a continuous mode. The mixed-plastic-polyethylene recycling blend (PERB) and the poly(n)functional acrylate compound may be added in parallel streams into a flow-through reactor. Preferably, the flow-through reactor is a horizontal flow-through reactor, and the components may be transported through the reactor by means of transporting paddles. **In** this way, very efficient absorption of the poly(n)functional acrylate compound by the mixed-plastic-polyethylene recycling blend (PERB) is reached.

**In** alternative embodiments, other reactors may be used, where, for example, the poly(n)functional acrylate compound is added to a reactor after the mixed-plastic-polyethylene recycling blend (PERB) has been placed therein.

**In** some embodiments, the poly(n)functional acrylate compound is added to the mixed-plastic-polyethylene recycling blend (PERB) contained in a melt processing unit. **In** case the mixed-plastic-polyethylene recycling blend (PERB) of step (I) is melted prior to step (II), step (II) may be performed at a higher temperature in the range of e.g., from 150 to 250 °C, such as from 160 to 240 °C.

### Optional Step (IIa) - Addition of radical initiator

**In** an optional step (IIa) of the process of the present invention, a radical initiator may be added to the mixed-plastic-polyethylene recycling blend (PERB).

This step (IIa) may take place before, concurrently or after step (II).

**In** some embodiments, the radical initiator is added in an amount of from 10 to 1,000 ppm, preferably from 20 to 900 ppm, more preferably from 100 to 800 ppm and most preferably from 150 to 700 ppm, relative to the total weight of the mixed-plastic-polyethylene recycling blend (PERB). The temperature of the radical initiator in step (IIa) will generally correspond to the temperature of step (I) and/or step (II).

The radical initiator may be selected from any radical initiator suitable for applications for polyethylene polymers. Preferably, the radical initiator is a carbon-carbon free radical compound, an azo compound, a stable nitroxyl compound, a sterically hindered NO-acyl compound or a peroxy compound, more preferably a peroxy compound. A preferred peroxy compound is selected from the group consisting of acyl peroxide, alkyl peroxide, hydroperoxide, perester, peroxycarbonate, and combinations thereof.

In preferred embodiments, the radical initiator is selected from the group consisting of di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tertbutylperoxyisopropyl)benzene, 2,5-dimethyl-2,5-di(benzoylperoxy)hexane, 1,1-di(tertbutylperoxy) cyclohexane, 1,1-di(tert amylperoxy)cyclohexane, and combinations thereof, 2,5-di(tert-butylperoxy)-2,5-dimethylhexane being most preferred.

The radical initiator may be added to the mixed-plastic-polyethylene recycling blend (PERB) in a solid or liquid form. The radical initiator is preferably added to the mixed-plastic-polyethylene recycling blend (PERB) in a form of a pre-mixture (masterbatch). Preferably, the radical initiator is pre-mixed with a carrier which can be a polymer, e.g., polyethylene or polypropylene, or other materials, e.g., silica or CaCO₃, forming a masterbatch. A suitable masterbatch is a polypropylene-based peroxide masterbatch containing 5 wt.-% of 2,5-dimethyl 2,5-di(tert-butylperoxy) hexane (commercial name Trigonox^{®} 101, produced and supplied by Nouryon Polymer chemistry).

The further conditions of step (IIa) are as described above for step (II).

The addition of a radical initiator has the advantage to further reduce the gel content.

### Step (III) - Compounding

In step (III) of the process of the present invention, the mixed-plastic-polyethylene recycling blend (PERB) and the poly(n)functional acrylate compound (and optionally the radical initiator) are compounded. In this way, a modified mixed-plastic-polyethylene recycling blend (modified PERB) is obtained.

Preferably, the compounding step (III) is carried out by extrusion. The preferred temperature range for extrusion is from 150 to 250 °C, more preferably from 160 to 240 °C, even more preferably from 165 to 230 °C and most preferably from 170 to 225 °C. During extrusion, the mixed-plastic-polyethylene recycling blend is generally melted.

Extrusion may be carried out in any conventional way known in the art. Preferably, extrusion is carried out in a continuous melt mixing device like a single screw extruder, a co-rotating twin screw extruder or a co-kneader. The barrel temperature is preferably in the range of from 150 to 250 °C. The screw speed of the melt mixing device preferably is adjusted to a range of from 100 to 750 rotations per minute (rpm), preferably 100 to 500 rpm and more preferably 100 to 300 rpm.

More preferably, the melt mixing device includes a feed zone, a kneading zone and a die zone and a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures. Barrel temperature T1 (in the feed zone) is preferably in the range of from 150 to 250 °C. Barrel temperature T2 (in the kneading zone) preferably is in the range of from 150 to 250 °C. Barrel temperature T3 (in the die zone) preferably is in the range of from 150 to 250 °C.

The compounding step (III) may optionally comprise mixing the mixed-plastic-polyethylene recycling blend (PERB) and the poly(n)functional acrylate compound (and optionally the radical initiator) prior to extrusion. Mixing is preferably carried out by contacting the components for a time of at least 2 minutes, preferably a time in the range of from 5 to 30 min, more preferably from 8 to 25 min, in order to reach relatively homogeneous absorption of the poly(n)functional acrylate compound by the mixed-plastic-polyethylene recycling blend. Mixing is preferably performed at a temperature in the range of from 20 to 90 °C, more preferably from 40 to 80 °C. Highly homogeneous adsorption is reached e.g., in a flow-through reactor as described above. After mixing, the mixed-plastic-polyethylene recycling blend (PERB) and the poly(n)functional acrylate compound (and optionally the radical initiator) may be kept in contact, for e.g. one or more hours, for soaking of the poly(n)functional acrylate compound (and optionally the radical initiator) by the mixed-plastic-polyethylene recycling blend, before extrusion.

In a preferred embodiment, one part or the entire process of the present invention is performed as a continuous process under the use of the flow-through reactors described above, and with direct transport of the composition of the mixed-plastic-polyethylene recycling blend (PERB) and the poly(n)functional acrylate compound (and optionally the radical initiator) into an extruder.

### Further process steps

In addition to the steps (I) to (III), further steps may be comprised in the process of the present invention.

Subsequently to step (III), the modified mixed-plastic-polyethylene recycling blend (modified PERB) may be pelletized, e.g., either in an underwater pelletizer or after solidification of one or more strands in a suitable pelletization process. Suitable pelletization processes include underwater pelletization, water-ring pelletization and strand pelletization, the latter comprising solidification of one or more melt strands in a water bath followed by cutting the strand into pellets.

In some embodiments, the compounding is carried out without pelletization. For example, the compounding may be carried out on the extrusion line of the film preparation, and the extruded modified mixed-plastic-polyethylene recycling blend (modified PERB) is directly processed to a film layer.

### Further additives

During the process of the present invention, further additives may be added to the mixture. In particular, common additives for preparation processes of polyolefins, such as modifiers, stabilizers, antistatic agents, lubricants, nucleating agents, foam nucleators, acid scavengers, UV stabilizers, slip agents and pigments, as well as fillers and reinforcement agents may be added. The advantage of the mixed-plastic-polyethylene recycling blend is that it usually contains additives from the preparation processes of virgin polymers and first-use articles, meaning that the further addition of additives may not be required at all. However, especially stabilizers like primary and secondary antioxidants are sometimes consumed during the processing and usage phase, and addition of stabilizers in suitable amounts is preferred. The additives are generally added in an amount of up to 10 wt.-%, preferably up to 5 wt.-%, relative to the total weight of the mixed-plastic-polyethylene recycling blend.

### Modified mixed-plastic-polyethylene recycling blend (modified PERB)

The process of the present invention reduces the crosslinking content, i.e., the content of crosslinked material, of the mixed-plastic-polyethylene recycling blend.

The modified mixed-plastic-polyethylene recycling blend (modified PERB) obtained by the process of the present invention is characterized by a relative xylene hot insoluble content (R_{XHU}) in the range of from 0.05 to 1.00, preferably from 0.10 to 0.80 and more preferably from 0.15 to 0.70, determined as described herein below and indicated as ${R}_{XHU} = 1 - \frac{XHU \left(modified PERB\right)}{XHU \left(PERB\right)} ,$ wherein XHU(modified PERB) is the xylene hot insoluble content of the modified mixed-plastic-polyethylene recycling blend (modified PERB) and XHU(PERB) is the xylene hot insoluble content of the mixed-plastic-polyethylene recycling blend (PERB) provided in step (I).

The xylene hot insoluble content (XHU) is based on the total weight of the modified mixed-plastic-polyethylene recycling blend (modified PERB) or the mixed-plastic-polyethylene recycling blend (PERB), respectively.

The process of the present invention also reduces the total gel content of the mixed-plastic-polyethylene recycling blend. Preferably, the modified mixed-plastic-polyethylene recycling blend (modified PERB) has a total gel content that corresponds to less than 90 % of the total gel content of the mixed-plastic-polyethylene recycling blend (PERB). In some embodiments, the total gel content of the modified mixed-plastic-polyethylene recycling blend (modified PERB) can amount to from 10 to less than 90 %, preferably from 20 to 85 % more preferably from 30 to 80 %, of the total gel content of the mixed-plastic-polyethylene recycling blend (PERB). The gel content is determined as described herein below.

The process of the present invention preferably also reduces the melt flow rate of the mixed-plastic-polyethylene recycling blend, while it preferably maintains the density of the mixed-plastic-polyethylene recycling blend mainly unaffected.

Preferably, the modified mixed-plastic-polyethylene recycling blend (modified PERB) has at least one, more preferably all, of the properties a) to c):
a) a modified melt flow rate MFRs (ISO 1133, 190 °C, 5 kg) in the range of from 0.5 to 5.0 g/10 min, preferably 0.7 to 4.5 g/10 min;
b) a modified melt flow rate MFRs (ISO 1133, 190 °C, 5 kg), wherein the ratio MFRs(modified PERB)/MFRs(PERB) is less than 1.00, preferably in the range of from 0.10 to 0.99, more preferably from 0.30 to 0.98 and most preferably from 0.50 to 0.97; and
c) a density (ASTM D 792) in the range of from 915 to 939 kg/m³, preferably from 920 to 930 kg/m³.

Preferably, the modified mixed-plastic-polyethylene recycling blend (modified PERB) is characterized by a xylene hot insoluble content (XHU), determined as described herein below and based on the total weight of the modified mixed-plastic-polyethylene recycling blend (modified PERB), in the range of from 0.05 to 1.0 wt.-%, more preferably from 0.05 to 0.8 wt.-% and most preferably from 0.05 to 0.5 wt.-%.

The present invention is also directed to the modified mixed-plastic-polyethylene recycling blend (modified PERB) obtained by the process of the present invention in any of the above-described embodiments and preferably comprising any one of the properties described above.

The present invention is also directed to a modified mixed-plastic-polyethylene recycling blend (modified PERB) obtained by compounding a mixed-plastic-polyethylene recycling blend (PERB) and 100 to 10,000 ppm, preferably from 500 to 8,000 ppm, more preferably from 800 to 6,000 ppm and most preferably from 1,000 to 5,000 ppm, of a poly(n)functional acrylate compound with n ≥ 2, relative to the total weight of the mixed-plastic-polyethylene recycling blend (PERB), to obtain a modified mixed-plastic-polyethylene recycling blend (modified PERB), preferably by extrusion, wherein
the mixed-plastic-polyethylene recycling blend (PERB) has
   i.1) a melt flow rate MFRs (ISO 1133, 190 °C, 5 kg) in the range of from 0.5 to 10.0 g/10 min, preferably from 0.7 to 7.0 g/10 min, more preferably from 1.0 to 5.0 g/10 min;
   i.2) a ratio of melt flow rates MFR₂₁/MFR₅ (ISO 1133, 190 °C, 21.6 kg and 5 kg) of more than 10, preferably in the range of from 11 to 30, more preferably from 12 to 25;
   i.3) a density (ASTM D 792) in the range of from 915 to 939 kg/m³, preferably from 918 to 935 kg/m³, more preferably from 920 to 930 kg/m³; and
   i.4) a total amount of ethylene units (C₂ units), based on the total weight of monomer units in the mixed-plastic-polyethylene recycling blend (PERB) and measured according to quantitative ¹³C{¹H} NMR as described herein below, in the range of from 80.0 to 96.0 wt.-%, preferably from 82.5 to 95.5 wt.-%, more preferably from 85.0 to 95.5 wt.-% and most preferably from 87.5 to 95.0 wt.-%; and
the modified mixed-plastic-polyethylene recycling blend (modified PERB) has
   a) a modified melt flow rate MFRs (ISO 1133, 190 °C, 5 kg) in the range of from 0.5 to 5.0 g/10 min, preferably 0.7 to 4.5 g/10 min;
   b) a modified melt flow rate MFRs (ISO 1133, 190 °C, 5 kg), wherein the ratio MFRs(modified PERB)/MFRs(PERB) is less than 1.00, preferably in the range of from 0.10 to 0.99, more preferably from 0.30 to 0.98 and most preferably from 0.50 to 0.97; and
   c) a density (ASTM D 792) in the range of from 915 to 939 kg/m³, preferably from 920 to 930 kg/m³, and
   d) a relative xylene hot insoluble content (R_{XHU}) in the range of from 0.05 to 1.00, determined as described herein below and indicated as ${R}_{XHU} = 1 - \frac{XHU \left(modified PERB\right)}{XHU \left(PERB\right)} ,$ wherein XHU(modified PERB) is the xylene hot insoluble content of the modified mixed-plastic-polyethylene recycling blend (modified PERB) and XHU(PERB) is the xylene hot insoluble content of the mixed-plastic-polyethylene recycling blend (PERB), and optionally has
   e) a xylene hot insoluble content (XHU), determined as described herein below and based on the total weight of the modified mixed-plastic-polyethylene recycling blend (modified PERB), in the range of from 0.05 to 1.00 wt.-%, preferably from 0.05 to 0.8 wt.-% and more preferably from 0.05 to 0.5 wt.-%.

Preferably, the modified mixed-plastic-polyethylene recycling blend (modified PERB) has a melt flow rate MFR₂ (ISO 1133, 2.16 kg, 190 °C) in the range of from 0.1 to 1.5 g/10 min, more preferably from 0.2 to 1.3 g/10 min; and/or a melt flow rate MFR₂₁ (ISO 1133, 21.6 kg, 190 °C) in the range of from 20.0 to 50.0 g/10 min, more preferably from 25.0 to 45.0 g/10 min.

### Films

The present invention is also directed to a film comprising the modified mixed-plastic-polyethylene recycling blend (modified PERB) in any of the above-described embodiments and preferences.

The film according to the present invention comprises at least one layer comprising the above-defined modified mixed-plastic-polyethylene recycling blend (modified PERB), in any of the embodiments depicted above. The film can be a monolayer film comprising the above-defined modified mixed-plastic-polyethylene recycling blend (modified PERB) or a multilayer film, wherein at least one layer comprises the above-defined modified mixed-plastic-polyethylene recycling blend (modified PERB). The terms "monolayer film" and "multilayer film" have well known meanings in the art.

Preferably, the film or the at least one layer of the film comprises at least 90 wt.-% of the above-defined modified mixed-plastic-polyethylene recycling blend (modified PERB), more preferably at least 95 wt.-%, still more preferably at least 99 wt.-% and even more preferably the film or the at least one layer consists of the above-defined modified mixed-plastic-polyethylene recycling blend (modified PERB).

The films may be produced by any conventional film extrusion procedure known in the art including cast film and blown film extrusion. Most preferably, the film is a blown or cast film, especially a blown film. E.g., the blown film is produced by extrusion through an annular die and blowing into a tubular film by forming a bubble which is collapsed between nip rollers after solidification. This film can then be slit, cut or converted (e.g., gusseted) as desired. Conventional film production techniques may be used in this regard. If the preferable blown or cast film is a multilayer film then the various layers are typically coextruded. The skilled person is aware of suitable extrusion conditions.

Films according to the present invention may be subjected to post-treatment processes, e.g., surface modifications, lamination or orientation processes or the like. Such orientation processes can be mono-axially (MDO) or bi-axially orientation, wherein mono-axial orientation is preferred.

Preferred films according to the present invention are monolayer blown films.

The monolayer film of the present invention may have a thickness in the range of from 20 to 120 µm, preferably from 30 to 100 µm and more preferably from 35 to 80 µm.

The films according to the present invention are preferably not stretched in the machine or transverse or biaxial direction, i.e., are unoriented.

The films according to the present invention are very homogeneous, as is indicated by a lower film thickness distribution.

Preferably, the thickness distribution is less than 9 %, more preferably less than 8 %, determined as described herein below on a 40 µm monolayer test blown film.

The process of the present invention does not impair mechanical properties of the film, and preferably, the stiffness of the film is not reduced.

Preferably, the Tensile Modulus (TM) in machine direction (MD) (ISO 527-3, 23 °C) is at least 200 MPa, more preferably in the range of from 200 to 400 MPa, and/or the Tensile Modulus (TM) in transverse direction (TD) (ISO 527-3, 23 °C) is at least 250 MPa, more preferably in the range of from 250 to 500 MPa.

The films according to the present invention are preferably packaging films, i.e., they may be used in various packaging applications, in particular for secondary packaging, which do not require a food approval, or even for primary packaging for non-food products.

Furthermore, the films according to the present invention may be used as a layer in multilayer polyethylene-based blown films, preferably as core layer in multilayer polyethylene-based blown films.

### Uses

The present invention is also directed to the use of the film in any of the embodiments described above as packaging material, preferably for non-food products. Further, the present invention also relates to the use of a poly(n)functional acrylate compound with n ≥ 2, as defined above, for reducing the content of crosslinked material, determined as described herein below, of a mixed-plastic-polyethylene recycling blend (PERB) having
i.1) a melt flow rate MFRs (ISO 1133, 190 °C, 5 kg) in the range of from 0.5 to 10.0 g/10 min, preferably from 0.7 to 7.0 g/10 min, more preferably from 1.0 to 5.0 g/10 min;
i.2) a ratio of melt flow rates MFR₂₁/MFR₅ (ISO 1133, 190 °C, 21.6 kg and 5 kg) of more than 10, preferably in the range of from 11 to 30, more preferably from 12 to 25;
i.3) a density (ASTM D 792) in the range of from 915 to 939 kg/m³, preferably from 918 to 935 kg/m³, more preferably from 920 to 930 kg/m³; and
i.4) a total amount of ethylene units (C₂ units), based on the total weight of monomer units in the mixed-plastic-polyethylene recycling blend (PERB) and measured according to quantitative ¹³C{¹H} NMR as described herein below, in the range of from 80.0 to 96.0 wt.-%, preferably from 82.5 to 95.5 wt.-%, more preferably from 85.0 to 95.5 wt.-% and most preferably from 87.5 to 95.0 wt.-%,
preferably, wherein 100 to 10,000 ppm, more preferably from 500 to 8,000 ppm, even more preferably from 800 to 6,000 ppm and most preferably from 1,000 to 5,000 ppm, relative to the total weight of the mixed-plastic-polyethylene recycling blend (PERB), of the radical initiator are used.

The content of crosslinked material is determined by the xylene hot insoluble content (XHU) and its determination is described herein below.

Further, the present invention also relates to the use of the poly(n)functional acrylate compound for reducing the total gel content in the mixed-plastic-polyethylene recycling blend (PERB), as defined above. The total gel content is determined as described herein below.

Preferably, the properties of the mixed-plastic-polyethylene recycling blend are modified by the use in such a way that films comprising the modified mixed-plastic-polyethylene recycling blend (modified PERB) do not show a decrease in Tensile Modulus (TM), compared to films comprising the same but unmodified mixed-plastic-polyethylene recycling blend (PERB).

The invention will be further described with reference to the following non-limiting examples.

### Examples

### Measurement methods

The following definitions of terms and determination methods apply for the above general description of the invention as well as to the below examples, unless otherwise defined.

### Melt Flow Rate (MFR₂)

The melt flow rate (MFR) was determined according to ISO 1133 and is indicated in g/10 min. The MFR is determined at 190 °C for polyethylene. MFR may be determined at different loadings such as 2.16 kg (MFR₂), 5 kg (MFR₅) or 21.6 kg (MFR₂₁).

### Xylene Hot Insoluble content (XHU)

About 2.0 g of the polymer (mₚ) was weighted and put in a mesh of metal which was weighted, the total weight being represented by (mₚ₊ₘ). The polymer in the mesh was extracted in a soxhlet apparatus with boiling xylene for 5 hours. The eluent was then replaced by fresh xylene and boiling was continued for another hour. Subsequently, the mesh was dried and weighted again (m_{XHU+m}). The mass of the xylene hot insoluble (m_{XHU}) obtained by the formula m_{XHU+m}-mₘ=m_{XHU} was put in relation to the weight of the polymer (mₚ) to obtain the fraction and thus the content of xylene hot insolubles m_{XHU}/mₚ.

### Density

Density of the polymer was measured according to ASTM D 792, Method B (density by balance at 23°C) on compression molded specimen prepared according to EN ISO 1872-2 (February 2007) and is given in kg/m³.

### Pellet dimensions

The average pellet dimensions of the polymer recyclate were determined by two methods applied for thickness and diameter respectively. Median pellet thickness, T50, is calculated from manually measuring the thickness of 10 pellets with a standardized caliper. Median pellet diameter, D50, is determined by optical measurement on pellets with a high-speed CCD camera, type PS25C of OCS GmbH, Germany.

### Tensile Modulus

Tensile modulus (E-Mod (MPa)) was measured in machine direction (MD) and/or transverse direction (TD) according to ISO 527-3 on film samples prepared as described under the Film Sample preparation with film thickness of 40 µm and at a cross head speed of 1 mm/min for the modulus.

### Quantification of C2, iPP (continuous C3), LDPE and polyethylene short chain branches in polyethylene based recyclates

Quantitative ¹³C{¹H} NMR spectra were recorded in the solution-state using a Bruker Avance II 400MHz NMR spectrometer operating at 400.15 and 100.62 MHz for H and ¹³C respectively. All spectra were recorded using a ¹³C optimized 10 mm extended temperature probehead at 125°C using nitrogen gas for all pneumatics. Approximately 200 mg of material was dissolved in 3 ml of 1,2-tetrachloroethane-*d*₂ (TCE-*d₂*) along with chromium-(III)-acetylacetonate (Cr(acac)₃) resulting in a 65 mM solution of relaxation agent in solvent {singh09}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme {zhou07,busico07}. A total of 6144 (6k) transients were acquired per spectra.

Quantitative ¹³C{¹H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. Characteristic signals corresponding to polyethylene with different short chain branches (B1, B2, B4, B5, B6plus) and polypropylene were observed {randall89, brandolini00}.

Characteristic signals corresponding to the presence of polyethylene containing isolated B1 branches (starB1 33.3 ppm), isolated B2 branches (starB2 39.8 ppm), isolated B4 branches (twoB4 23.4 ppm), isolated B5 branches (threeB5 32.8 ppm), all branches longer than 4 carbons (starB4plus 38.3 ppm) and the third carbon from a saturated aliphatic chain end (3s 32.2 ppm) were observed. The intensity of the combined ethylene backbone methine carbons (ddg) containing the polyethylene backbone carbons (dd 30.0 ppm), γ-carbons (g 29.6 ppm) the 4s and the threeB4 carbon (to be compensated for later on) is taken between 30.9 ppm and 29.3 ppm excluding the Tββ from polypropylene. The amount of C2 related carbons was quantified using all mentioned signals according to the following equation: 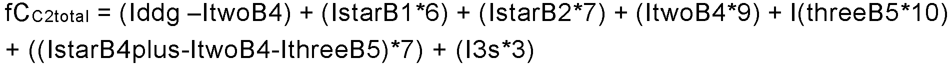 fCC2total = (Iddg -ItwoB4) + (IstarB1*6) + (IstarB2*7) + (ItwoB4*9) + I(threeB5*10) + ((IstarB4plus-ItwoB4-IthreeB5)*7) + (I3s*3)

Characteristic signals corresponding to the presence of polypropylene (iPP, continuous C3)) were observed at 46.7 ppm, 29.0 ppm and 22.0 ppm. The amount of PP related carbons was quantified using the integral of Sαα at 46.6 ppm: ${fC}_{PP} = Isαα * 3$

The weight percent of the C2 fraction and the polypropylene can be quantified according following equations: ${wt}_{C 2 fraction} = {fC}_{C 2 total} * 100 / \left({fC}_{C 2 total}+{fC}_{PP}\right)$ ${wt}_{PP} = {fC}_{PP} * 100 / \left({fC}_{C 2 total}+{fC}_{PP}\right)$

Characteristic signals corresponding to various short chain branches were observed and their weight percentages quantified as the related branch would be an alpha-olefin, starting by quantifying the weight fraction of each: $fwtC 2 = {fC}_{C 2 total} - \left(\left(IstarB1*3\right)\right. - \left(IstarB2*4\right) - \left(ItwoB4*6\right) - \left(IthreeB5*7\right)$ $fwtC 3 \left(isolated C3\right) = IstarB 1 * 3$ $fwtC 4 = IstarB 2 * 4$ $fwtC 6 = ItwoB 4 * 6$ $fwtC 7 = IthreeB 5 * 7$

Normalization of all weight fractions leads to the amount of weight percent for all related branches: ${fsum}_{wt . - % total} = fwtC 2 + fwtC 3 + fwtC 4 + fwtC 6 + fwtC 7 + {fC}_{PP}$ $wtC 2 total = fwtC 2 * 100 / {fsum}_{wt . - % total}$ $wtC 3 total = fwtC 3 * 100 / {fsum}_{wt . - % total}$ $wtC 4 total = fwtC 4 * 100 / {fsum}_{wt . - % total}$ $wtC 6 total = fwtC 6 * 100 / {fsum}_{wt . - % total}$ $wtC 7 total = fwtC 7 * 100 / {fsum}_{wt . - % total}$

The content of LDPE can be estimated assuming the B5 branch, which only arises from ethylene being polymerized under high pressure process, being almost constant in LDPE. We found the average amount of B5 if quantified as C7 at 1.46 wt.-%. With this assumption it is possible to estimate the LDPE content within certain ranges (approximately between 20 wt.-% and 80 wt.-%), which are depending on the SNR ratio of the threeB5 signal: $wt . - % LDPE = wtC 7 total * 100 / 1.46$

### References:

- zhou07: Zhou, Z., Kuemmerle, R., Qiu, X., Redwine, D., Cong, R., Taha, A., Baugh, D. Winniford, B., J. Mag. Reson. 187 (2007) 225.
- busico07: Busico, V., Carbonniere, P., Cipullo, R., Pellecchia, R., Severn, J., Talarico, G., Macromol. Rapid Commun. 2007, 28, 1128.
- singh09: Singh, G., Kothari, A., Gupta, V., Polymer Testing 28 5 (2009), 475.
- randall89: J. Randall, Macromol. Sci., Rev. Macromol. Chem. Phys. 1989, C29, 201.
- brandolini00: A. J. Brandolini, D. D. Hills, NMR Spectra of Polymers and Polymer Additives, Marcel Dekker Inc., 2000.

### Rheological measurements

### Dynamic Shear Measurements (frequency sweep measurements)

The characterization of melt of polymer composition or polymer as given above or below in the context by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression molded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by $γ \left(t\right) = {γ}_{0} sin \left(ωt\right)$

If the applied strain is within the linear viscoelastic regime, the resulting sinusoidal stress response can be given by $σ \left(t\right) = {σ}_{0} sin \left(ωt+δ\right)$ where
*σ*₀ and *γ*₀ are the stress and strain amplitudes, respectively
*ω* is the angular frequency
*δ* is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, η*, the dynamic shear viscosity, η', the out-of-phase component of the complex shear viscosity η" and the loss tangent, tan δ which can be expressed as follows: $G ′ = \frac{{σ}_{0}}{{γ}_{0}} cos δ \left[Pa\right]$ $G " = \frac{{σ}_{0}}{{γ}_{0}} sin δ \left[Pa\right]$ $G * = G ′ + iG " \left[Pa\right]$ $η * = η ′ - iη " \left[Pa.s\right]$ $η ′ = \frac{G "}{ω} \left[Pa.s\right]$ $η " = \frac{G ′}{ω} \left[Pa.s\right]$

The determination of so-called Shear Thinning Index (SHI), which correlates with MWD and is independent of Mw, is done as described in equation 9. ${SHI}_{\left(x/y\right)} = \frac{Eta * for \left(G*=x kPa\right)}{Eta * for \left(G*=y kPa\right)}$

For example, the SHI_{(2.7/210)} is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity (η*) were obtained as a function of frequency (ω).

Thereby, e.g., η*_{300rad/s} (eta*_{300rad/s}) is used as abbreviation for the complex viscosity at the frequency of 300 rad/s and η*_{0.05rad/s} (eta*_{0.05rad/s}) is used as abbreviation for the complex viscosity at the frequency of 0.05 rad/s.

The loss tangent tan (delta) is defined as the ratio of the loss modulus (G") and the storage modulus (G') at a given frequency. Thereby, e.g., tan_{0.05} is used as abbreviation for the ratio of the loss modulus (G") and the storage modulus (G') at 0.05 rad/s and tan₃₀₀ is used as abbreviation for the ratio of the loss modulus (G") and the storage modulus (G') at 300 rad/s.

The elasticity balance tan_{0.05}/tan₃₀₀ is defined as the ratio of the loss tangent tan_{0.05} and the loss tangent tan₃₀₀.

Besides the above mentioned rheological functions one can also determine other rheological parameters such as the so-called elasticity index *EI(x).* The elasticity index *EI(x)* is the value of the storage modulus (G') determined for a value of the loss modulus (G") of x kPa and can be described by equation 10. $EI \left(x\right) = G ′ for \left(G"=x kPa\right) \left[Pa\right]$

For example, the *EI*(5kPa) is the defined by the value of the storage modulus (G'), determined for a value of G" equal to 5 kPa.

The polydispersity index, *PI,* is defined by equation 11. $PI = \frac{{10}^{5}}{G ′ \left({ω}_{COP}\right)} , {ω}_{COP} = ω for \left(G′=G"\right)$ where ω_{COP} is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

### References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362
[2] The influence of molecular structure on some rheological properties of polyethylene", Heino, E.L., Borealis Polymers Oy, Porvoo, Finland, Annual Transactions of the Nordic Rheology Society, 1995.).
[3] Definition of terms relating to the non-ultimate mechanical properties of polymers, Pure & Appl. Chem., Vol. 70, No. 3, pp. 701-754, 1998

### Strain hardening (SH) modulus

The strain hardening test is a modified tensile test performed at 80 °C on a specially prepared thin sample. The Strain Hardening Modulus (MPa), <Gp>, is calculated from True Strain-True Stress curves; by using the slope of the curve in the region of True Strain, λ, is between 8 and 12.

The true strain, λ, is calculated from the length, l (mm), and the gauge length, l0 (mm), as shown by Equation 1. $λ = \frac{l}{{l}_{0}} = 1 + \frac{Δl}{{l}_{0}}$ where ΔI is the increase in the specimen length between the gauge marks, (mm). The true stress, σtrue (MPa), is calculated according to formula 2, assuming conservation of volume between the gauge marks: ${σ}_{true} = {σ}_{n} λ$ where σn is the engineering stress.

The Neo-Hookean constitutive model (Equation 3) is used to fit the true strain-true stress data from which <Gp> (MPa) for 8 < λ < 12 is calculated. ${σ}_{true} = \frac{\left〈Gp\right〉}{20} \left({λ}^{2}-\frac{1}{λ}\right) + C$ where C is a mathematical parameter of the constitutive model describing the yield stress extrapolated to λ = 0.

Initially five specimens are measured. If the variation coefficient of <Gp> is greater than 2.5 %, then two extra specimens are measured. In case straining of the test bar takes place in the clamps the test result is discarded.

The PE granules of materials were compression molded in sheets of 0.30 mm thickness according to the press parameters as provided in ISO 17855-2.

After compression molding of the sheets, the sheets were annealed to remove any orientation or thermal history and maintain isotropic sheets. Annealing of the sheets was performed for 1 h in an oven at a temperature of (120 ± 2) °C followed by slowly cooling down to room temperature by switching off the temperature chamber. During this operation free movement of the sheets was allowed.

Next, the test pieces were punched from the pressed sheets. The specimen geometry of the modified ISO 37:1994 Type 3 (Figure 3) was used.

The sample has a large clamping area to prevent grip slip, dimensions given in Table A.

**Table A: Dimensions of Modified ISO 37:1994 Type 3**

| Dimension | | Size (mm) |
|---|---|---|
| L | Start length between clamps | 30.0 +/- 0.5 |
| I0 | Gauge length | 12.5 +/- 0.1 |
| I1 | Prismatic length | 16.0 +/- 1.0 |
| I3 | Total length | 70 |
| R1 | Radius | 10.0 +/- 0.03 |
| R2 | Radius | 8.06 +/- 0.03 |
| b1 | Prismatic width | 4.0 +/- 0.01 |
| b2 | Clamp width | 20.0 +/- 1.0 |
| h | Thickness | 0.30 + 0.05/0.30 - 0.03 |

The punching procedure is carried out in such a way that no deformation, crazes or other irregularities are present in the test pieces.

The thickness of the samples was measured at three points of the parallel area of the specimen; the lowest measured value of the thickness of these measurements was used for data treatment.
1. The following procedure is performed on a universal tensile testing machine having controlled temperature chamber and non-contact extensometer:
2. Condition the test specimens for at least 30 min in the temperature chamber at a temperature of (80 ± 1) °C prior to starting the test.
3. Clamp the test piece on the upper side.
4. Close the temperature chamber.
5. Close the lower clamp after reaching the temperature of (80 ± 1) °C.
6. Equilibrate the sample for 1 min between the clamps, before the load is applied and measurement starts.
7. Add a pre-load of 0.5 N at a speed of 5 mm/min.
8. Extend the test specimen along its major axis at a constant traverse speed (20 mm/min) until the sample breaks.

During the test, the load sustained by the specimen is measured with a load cell of 200 N. The elongation is measured with a non-contact extensometer.

### Gel content and gel index

The gel content was measured via gel count with a gel counting apparatus consisting of a measuring extruder, **ME** 25 / 5200 V1, 25*25D, with five temperature conditioning zones adjusted to a temperature profile of 170/180/190/190/190°C, an adapter and a slit die (with an opening of 0.5 * 150 mm). Attached to this were a chill roll unit (with a diameter of 13 cm with a temperature set of 50°C), a line camera (CCD 4096 pixel for dynamic digital processing of grey tone images) and a winding unit.

For the gel count measurements, the materials were extruded at a screw speed of 30 rounds per minute, a drawing speed of 3-3.5 m/min and a chill roll temperature of 50°C to make thin cast films with a thickness of 70 µm and a width of approximately 110 mm.

The resolution of the camera is 25 µm x 25 µm on the film. The camera works in transmission mode with a constant grey value (auto.set. margin level = 170). The system is able to decide between 256 grey values from black = 0 to white = 256. For detecting gels, a sensitivity level dark of 25% is used. For each material the average number of gel dots on a film surface area of 10 m² was inspected by the line camera. The line camera was set to differentiate the gel dot size according to the following:

### Gel size (the size of the longest dimension of a gel)

| | |
|---|---|
| Size class 1: | 100 to 299 µm |
| Size class 2: | 300 µm to 599 µm |
| Size class 3: | 600 µm to 999 µm |
| Size class 4: | above 1000 µm |

The gel counts for the gels of the different size classes were measured and are given as counts per m². They represent the gel content of the respective size classes. The total gel content is the sum of these gel contents.

For the determination of the gel index, the counts in the respective size classes were multiplied with a particular weigh factor as given below. The sum of the counts of each size class multiplied with the weight factor represents the gel index (GI).

| | | | |
|---|---|---|---|
| Size class 1: | 100 to 299 µm | weight factor: | 0.1 |
| Size class 2: | 300 µm to 599 µm | weight factor: | 1.0 |
| Size class 3: | 600 µm to 999 µm | weight factor: | 5.0 |
| Size class 4: | above 1000 µm | weight factor: | 10.0 |

### Example:

| | | | |
|---|---|---|---|
| Size class 1: | 17 counts | x weight factor: 0.1 | = 1.7 |
| Size class 2: | 5 counts | x weight factor: 1.0 | = 5.0 |
| Size class 3: | 2 counts | x weight factor: 5.0 | = 10.0 |
| Size class 4: | 0 counts | x weight factor: 10.0 | = 0.0 |
| | | gel index (GI) = sum | = 16.7 |

### Amounts of different polymers by Fourier Transform Infrared Spectroscopy (FTIR) analysis

All calibration samples and samples to be analyzed are prepared in similar way, on molten pressed plates.

Around 2 to 3 g of compounds to be analyzed are molten at 190°C. Subsequently, for 20 seconds 60 to 80 bar pressure is applied in a hydraulic heating press. Next, the samples are cooled down to room temperature in 40 second in a cold press under the same pressure, in order to control the morphology of the compound. The thickness of the plates is controlled by metallic calibrated frame plates 2,5 cm by 2,5 cm, 100 to 200 µm thick (depending MFR from the sample); two plates are produced in parallel at the same moment and in the same conditions. The thickness of each plate is measured before any FTIR measurements; all plates are between 100 to 200 µm thick.

To control the plate surface and to avoid any interference during the measurement, all plates are pressed between two double-sided silicone release papers.

In case of powder samples or heterogeneous compounds, the pressing process would be repeated three times to increase homogeneity by pressed and cutting the sample in the same conditions as described before.

Standard transmission FTIR spectroscope such as Bruker Vertex 70 FTIR spectrometer is used with the following set-up:
- a spectral range of 4000-400 cm⁻¹,
- an aperture of 6 mm,
- a spectral resolution of 2 cm⁻¹,
- with 16 background scans, 16 spectrum scans,
- an interferogram zero filling factor of 32
- Norton Beer strong apodisation.

Spectrum are recorded and analyzed in Bruker Opus software.

As FTIR is a secondary method, several calibration standards were compounded to cover the targeted analysis range, typically from:
- 0,2 wt% to 2,5 wt% for PA
- 0,1 wt% to 5 wt% for PS
- 0,2 wt% to 2,5 wt% for PET
- 0,1 wt% to 4 wt% for PVC

The following commercial materials were used for the compounds: Borealis HC600TF as iPP, Borealis FB3450 as HDPE and for the targeted polymers such RAMAPET N1S (Indorama Polymer) for PET, Ultramid^{®} B36LN (BASF) for Polyamide 6, Styrolution PS 486N (Ineos) for High Impact Polystyrene (HIPS), and for PVC Inovyn PVC 263B (under powder form).

All compounds are made at small scale in a Haake kneader at a temperature below 265°C and less than 10 minutes to avoid degradation.

Additional antioxidant such as Irgafos 168 (3000 ppm) is added to minimize the degradation.

The FTIR calibration principal is the same for all the components: the intensity of a specific FTIR band divided by the plate thickness is correlated to the amount of component determined by ¹H or ¹³C solution state NMR on the same plate.

Each specific FTIR absorption band is chosen due to its intensity increase with the amount of the component concentration and due to its isolation from the rest of the peaks, whatever the composition of the calibration standard and real samples.

This methodology is described in the publication from Signoret and al. "Alterations of plastic spectra in MIR and the potential impacts on identification towards recycling", Resources, conservation and Recycling journal, 2020, volume 161, article 104980.

The wavelength for each calibration band is:
- 3300 cm⁻¹ for PA,
- 1601 cm⁻¹ for PS,
- 1410 cm⁻¹ for PET,
- 615 cm⁻¹ for PVC,
- 1167 cm⁻¹ for iPP.

For each polymer component i, a linear calibration (based on linearity of Beer-Lambert law) is constructed. A typical linear correlation used for such calibrations is given below: ${x}_{i} = {A}_{i} . \frac{{E}_{i}}{d} + {B}_{i}$ where
xᵢ is the fraction amount of the polymer component i (in wt%)
Eᵢ is the absorbance intensity of the specific band related to the polymer component i (in a.u. absorbance unit). These specific bands are, 3300 cm⁻¹ for PA, 1601 cm⁻¹ for PS, 1410 cm⁻¹ for PET, 615 cm⁻¹ for PVC, 1167 cm⁻¹ for iPP
d is the thickness of the sample plate
Aᵢ and Bᵢ are two coefficients of correlation determined for each calibration curve

No specific isolated band can be found for C2 rich fraction and as a consequence the C2 rich fraction is estimated indirectly, ${x}_{C 2 rich} = 100 - \left({x}_{iPP}+{x}_{PA}+{x}_{PS}+{x}_{PET}+{x}_{EVA}+{x}_{PVC}+{x}_{chalk}+{x}_{talc}\right)$

The EVA, Chalk and Talc contents are estimated *"semi-quantitatively".* Therefore, the heights of the peaks at the corresponded band positions 607 cm⁻¹ for EVA, 1798 cm⁻¹ for Chalk and 3676 cm⁻¹ for Talc were used to semi-quantitatively determine the contents of EVA, Chalk, and Talc. Hence, this renders the C2 rich content *"semi-quantitative".*

For each calibration standard, wherever available, the amount of each component is determined by either ¹H or ¹³C solution state NMR, as primary method (except for PA). The NMR measurements are performed on the exact same FTIR plates used for the construction of the FTIR calibration curves.

### Talc and Chalk content

Thermogravimetric Analysis (TGA) experiments were performed with a Perkin Elmer TGA 8000 in line with ISO 3451-1 (1997). Approximately 10-20 mg of material was placed in a platinum pan. The temperature was equilibrated at 50 °C for 10 minutes, and afterwards raised to 950 °C under nitrogen at a heating rate of 20 °C/min. The weight loss between ca. 550 °C and 700 °C (WCO₂) was assigned to CO₂ evolving from CaCO₃, and therefore the chalk content was evaluated as: $Chalk content = 100 / 44 \times {WCO}_{2}$

Afterwards the temperature was lowered to 300°C at a cooling rate of 20 °C/min. Then the gas was switched to oxygen, and the temperature was raised again to 900 °C. The weight loss in this step was assigned to carbon black (Wcb). Knowing the content of carbon black and chalk, the ash content excluding chalk and carbon black was calculated as: $Ash content = \left(Ash residue\right) - 56 / 44 \times {WCO}_{2} - Wcb$ where Ash residue is the wt.-% measured at 900 °C in the first step conducted under nitrogen. The ash content is estimated to be the same as the talc content for the investigated recyclates.

### Amount of Metals

The metal amount was determined by X-ray fluorescence (XRF).

### Amount of Paper and Wood

Paper and wood amounts were determined by conventional laboratory methods including milling, floatation, microscopy and Thermogravimetric Analysis (TGA).

### Limonene measurement

Limonene quantification was carried out using solid phase micro-extraction (HS-SPME-GC-MS) by standard addition.

50 mg ground samples were weighed into 20 mL headspace vials and after the addition of limonene in different concentrations and a glass-coated magnetic stir bar. The vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1 mg/kg and 5 mg/kg limonene, in addition standard amounts of 6.6 mg/kg, 11 mg/kg and 16.5 mg/kg limonene were used in combination with some of the samples tested in this application. For quantification, ion 93 acquired in SIM mode was used. Enrichment of the volatile fraction was carried out by headspace solid phase micro-extraction with a 2 cm stable flex 50/30 pm DVB/Car-boxen/PDMS fibre at 60 °C for 20 minutes. Desorption was carried out directly in the heated injection port of a GCMS system at 270 °C.

### GCMS Parameters:

Column: 30 m HP 5 MS 0.25*0.25
Injector: Splitless with 0.75 mm SPME Liner, 270 °C
Temperature program: -10°C (1 min)
Carrier gas: Helium 5.0, 31 cm/s linear velocity, constant flow
MS: Single quadrupole, direct interface, 280 °C interface temperature
Acquisition: SIM scan mode
Scan parameter: 20-300 amu
SIM Parameter: m/Z 93, 100 ms dwell time

### Total free fatty acid content

Fatty acid quantification was carried out using headspace solid phase micro extraction (HS-SPME-GC-MS) by standard addition.

50 mg ground samples were weighed in 20 mL headspace vial and after the addition of limonene in different concentrations and a glass-coated magnetic stir bar the vial was closed with a magnetic cap lined with silicone/PTFE. 10 µL Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

### GCMS Parameter:

Column: 20 m ZB Wax plus 0.25*0.25
Injector: Split 5:1 with glass lined split liner, 250 °C
Temperature program: 40°C (1 min) @6 °C/min to 120 °C, @15 °C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60,74, 6.6 scans/s

### Film sample preparation

The test films consisting of the inventive compositions and respective comparative compositions of 40 µm thickness, were prepared using a Collin 30 lab scale mono layer blown film line. The film samples were produced at 190 °C, a 1:2.5 blow-up ratio, a frostline distance of 120 mm and an uptake speed of 7.6 m/min. Blending was done directly on the film extrusion line.

### Film thickness distribution

The film thickness distribution was determined using a capacitive offline thickness measurement device, model GPA-CAP (produced by Octagon Process Technology). The thickness distribution is then displayed as a 2-sigma deviation, which means that 95.4 % of all values are lying within the interval of the normal distribution.

### Experimental:

### Materials used:

NAV 101 was used as mixed-plastic-polyethylene recycling blend (PERB).
NAV 101 is a post-consumer recyclate blend of low density available from Ecoplast Kunststoffrecycling GmbH. The properties of NAV101 are shown in Table B:

**Table B: Properties of NAV 101**

| | |
|---|---|
| Ethylene content (wt.-%) | 90.67 |
| isol. C₃ content (wt.-%) | 0 |
| C₄ content (wt.-%) | 2.23 |
| C₆ content (wt.-%) | 2.73 |
| C₇ content (wt.-%) | 0.48 |
| iPP content (wt.-%) | 3.89 |
| LDPE content (wt.-%) | 33.00 |
| Density (kg/m³) | 923.9 |
| SHI 2.7/210 | 22.16 |
| eta 0.05 (Pa·s) | 16187 |
| eta 300 (Pa·s) | 618 |
| PI (s⁻¹) | 1.46 |
| SH modulus (MPa) | 14.3 |

Trimethylolpropane trimethacrylate (TMPTMA), technical grade, purchased from Sigma Aldrich (CAS No. 3290-92-4), was used as the poly(n)functional acrylate compound.

### Preparation process:

NAV 101 (in Table B) was premixed with 0.3 wt-% of TMPTMA in a high speed mixer, then the mixture was stored at room temperature overnight in a tight container, to let the pellets to soak the TMPTMA completely.

The compounding was done in a ZSK 18 twin screw extruder, the screw speed was 120 rpm, at temperature T1=170 °C, T2=205 °C, T3=210 °C, and melt T=210 °C. The production rate was 7 kg/h. The melt was cooled and pelletized.

The properties of this example (IE1) are summarized in Table C below. Comparative example (CE1) is the unmodified NAV 101 polymer blend, which was compounded as IE1 (without TMPTMA).

**Table C: Properties of the unmodified and modified polymer blends**

| **Property** | **unit** | **IE1** | **CE1** |
|---|---|---|---|
| NAV 101 content | wt.-% | 99.7 | 100 |
| TMPTMA content | wt.-% | 0.3 | 0 |
| MFR₂ | g/10 min | 0.4 | 0.4 |
| MFR₅ | g/10 min | 1.9 | 2.0 |
| MFR₂₁ | g/10 min | 29.1 | 31.2 |
| MFR₂₁/MFR₅ | - | 15.5 | 15.7 |
| Gel index (GI) | - | 2474 | 3110 |
| Total gel content | 1/m² | 17795 | 22844 |
| Xylene hot insoluble content (XHU) | wt.-% | 0.08 | 0.12 |
| R_{XHU} | - | 0.33 | - |

The xylene hot insoluble content was reduced by more than 30 % in the modified polymer blend. The gel content was also significantly reduced in the modified polymer blend, amounting to less than 80 %of the unmodified polymer blend.

### Film preparation:

Monolayer blown films were produced from polymers of Examples IE1 and CE1 in line with the general description above.

The properties of the films are summarized in Table D below.

**Table D: Film properties**

| **Property** | **unit** | **IE1** | **CE1** |
|---|---|---|---|
| Tensile Modulus (MD) | MPa | 233 | 237 |
| Tensile Modulus (TD) | MPa | 301 | 290 |
| Thickness distribution | % | 7.8 | 9.1 |

Thickness distribution of the modified polymer blend IE1 was significantly improved as indicated by the lower thickness distribution, meaning that the processability of the material is better. Tensile modulus was almost unchanged meaning that the stiffness of the film is not negatively affected by the process of the present invention.

## Claims

1. A process for modifying a mixed-plastic-polyethylene recycling blend comprising the following steps:
I) providing a mixed-plastic-polyethylene recycling blend (PERB) having
i.1) a melt flow rate MFRs (ISO 1133, 190 °C, 5 kg) in the range of from 0.5 to 10.0 g/10 min,
i.2) a ratio of melt flow rates MFR₂₁/MFR₅ (ISO 1133, 190 °C, 21.6 kg and 5 kg) of more than 10,
i.3) a density (ASTM D 792) in the range of from 915 to 939 kg/m³, and
i.4) a total amount of ethylene units (C₂ units), based on the total weight of monomer units in the mixed-plastic-polyethylene recycling blend (PERB) and measured according to quantitative ¹³C{¹H} NMR as described in the specification, in the range of from 80.0 to 96.0 wt.-%,
(II) adding 100 to 10,000 ppm of a poly(n)functional acrylate compound with n ≥ 2, relative to the total weight of the mixed-plastic-polyethylene recycling blend (PERB), and
(III) compounding the mixed-plastic-polyethylene recycling blend (PERB) and the poly(n)functional acrylate compound to obtain a modified mixed-plastic-polyethylene recycling blend (modified PERB),
wherein the modified mixed-plastic-polyethylene recycling blend (modified PERB) has a relative xylene hot insoluble content (R_{XHU}) in the range of from 0.05 to 1.00, determined as described in the specification and indicated as ${R}_{XHU} = 1 - \frac{XHU \left(modified PERB\right)}{XHU \left(PERB\right)} ,$
wherein XHU(modified PERB) is the xylene hot insoluble content of the modified mixed-plastic-polyethylene recycling blend (modified PERB) and XHU(PERB) is the xylene hot insoluble content of the mixed-plastic-polyethylene recycling blend (PERB) provided in step (I).

2. The process according to claim 1, wherein the modified mixed-plastic-polyethylene recycling blend (modified PERB) has at least one, preferably all, of the properties a) to c):
a) a modified melt flow rate MFRs (ISO 1133, 190 °C, 5 kg) in the range of from 0.5 to 5.0 g/10 min,
b) a modified melt flow rate MFRs (ISO 1133, 190 °C, 5 kg), wherein the ratio MFRs(modified PERB)/MFRs(PERB) is less than 1.00, and
c) a density (ASTM D 792) in the range of from 915 to 939 kg/m³.

3. The process according to any one of the preceding claims, wherein the mixed-plastic-polyethylene recycling blend (PERB) has a ratio of melt flow rates MFR₂₁/MFR₅ (ISO 1133, 190 °C, 21.6 kg and 5 kg) in the range of from 11 to 30, preferably from 12 to 25, and/or a density (ASTM D 792) in the range of from 918 to 935 kg/m³, preferably from 920 to 930 kg/m³, and/or a melt flow rate MFR₂ (ISO 1133, 190 °C, 2.16 kg) in the range of from 0.1 to 1.5 g/10 min.

4. The process according to any one of the preceding claims, wherein the mixed-plastic-polyethylene recycling blend (PERB) comprises, based on the total weight of monomer units in the mixed-plastic-polyethylene recycling blend (PERB) and measured according to quantitative ¹³C{¹H} NMR as described in the specification,
a) a total amount of ethylene units (C₂ units) in the range from 80.0 to 96.0 wt.-%, preferably from 82.5 to 95.5 wt.-%, more preferably from 85.0 to 95.5 wt.-% and most preferably of from 87.5 to 95.0 wt.-%, and
b) a total amount of continuous units having 3 carbon atoms corresponding to polypropylene (continuous C₃ units) in the range of from 0.2 to 6.5 wt.-%, preferably from 0.4 to 6.0 wt.-%, more preferably from 0.6 to 5.5 wt.-% and most preferably from 0.75 to 5.0 wt.-%.

5. The process according to any one of the preceding claims, wherein the mixed-plastic-polyethylene recycling blend (PERB) comprises at least one, preferably all, of the features a) to e), based on the total weight of monomer units in the mixed-plastic-polyethylene recycling blend (PERB) and measured according to quantitative ¹³C{¹H} **NMR** as described in the specification,
a) a total amount of units having 3 carbon atoms as isolated C₃ units (isolated C₃ units) in the range of from 0.00 to 0.50 wt.-%, preferably from 0.00 to 0.40 wt.-%, more preferably from 0.00 to 0.30 wt.-% and most preferably from 0.00 to 0.25 wt.-%,
b) a total amount of units having 4 carbon atoms (C₄ units) in the range of from 0.50 to 5.00 wt.-%, preferably from 0.75 to 4.00 wt.-%, still more preferably from 1.00 to 3.50 wt.-% and most preferably from 1.25 to 3.00 wt.-%,
c) a total amount of units having 6 carbon atoms (C₆ units) in the range of from 0.50 to 7.50 wt.-%, preferably from 0.75 to 6.50 wt.-%, more preferably from 1.00 to 5.50 wt.-% and most preferably from 1.25 to 5.00 wt.-%,
d) a total amount of units having 7 carbon atoms (C₇ units) in the range of from 0.20 to 2.50 wt.-%, preferably from 0.30 to 2.00 wt.-%, more preferably from 0.40 to 1.50 wt.-% and most preferably from 0.45 to 1.25 wt.-%, and
e) an **LDPE** content in the range of from 20.0 to 65.0 wt.-%, preferably from 25.0 to 62.5 wt.-%, more preferably from 30.0 to 60.0 wt.-% and most preferably from 32.0 to 55.0 wt.-%.

6. The process according to any one of the preceding claims, wherein in step (II) from 500 to 8,000 ppm, preferably from 800 to 6,000 ppm and more preferably from 1,000 to 5,000 ppm, of the poly(n)functional acrylate compound, relative to the total weight of the mixed-plastic-polyethylene recycling blend (PERB), are added.

7. The process according to any one of the preceding claims, wherein the poly(n)functional acrylate compound is a di- or tri-(meth)acrylate selected from the group consisting of 1,4-butanediol-dimethacrylate (BDDMA), 1,6-hexanediol-dimethacrylate (HDDMA), 1,3-butyleneglycol-dimethacrylate (BGDMA), ethyleneglycol-dimethacrylate (EGDMA), dodecanediol-dimethacrylate (DDDMA), trimethylolpropane-trimethacrylate (TMPTMA), trimethylolpropane-triacrylate (TMPTA) and combinations thereof, and is preferably trimethylolpropane-trimethacrylate (TMPTMA) and/or trimethylolpropane-triacrylate (TMPTA).

8. The process according to any one of the preceding claims, wherein the compounding in step (III) is carried out at a temperature in the range of from 150 to 250 °C, preferably from 160 to 240 °C, more preferably from 165 to 230 °C and most preferably from 170 to 225 °C, and preferably by extrusion.

9. The process according to any one of the preceding claims, wherein the ratio MFRs(modified PERB)/MFRs(PERB) is in the range of from 0.10 to 0.99, preferably from 0.30 to 0.98 and more preferably from 0.50 to 0.97, and/or the relative xylene hot insoluble content (R_{XHU}) of the modified mixed-plastic-polyethylene recycling blend (modified PERB) is in the range of from 0.10 to 0.80, preferably from 0.15 to 0.70.

10. A modified mixed-plastic-polyethylene recycling blend (modified PERB) obtained by the process according to any one of the preceding claims.

11. A modified mixed-plastic-polyethylene recycling blend (modified PERB) obtained by compounding a mixed-plastic-polyethylene recycling blend (PERB) and 100 to 10,000 ppm of a poly(n)functional acrylate compound with n ≥ 2, relative to the total weight of the mixed-plastic-polyethylene recycling blend (PERB), to obtain a modified mixed-plastic-polyethylene recycling blend (modified PERB), wherein
the mixed-plastic-polyethylene recycling blend (PERB) has
i.1) a melt flow rate MFRs (ISO 1133, 190 °C, 5 kg) in the range of from 0.5 to 10.0 g/10 min,
i.2) a ratio of melt flow rates MFR₂₁/MFR₅ (ISO 1133, 190 °C, 21.6 kg and 5 kg) of more than 10,
i.3) a density (ASTM D 792) in the range of from 915 to 939 kg/m³, and
i.4) a total amount of ethylene units (C₂ units), based on the total weight of monomer units in the mixed-plastic-polyethylene recycling blend (PERB) and measured according to quantitative ¹³C{¹H} NMR as described in the specification, in the range of from 80.0 to 96.0 wt.-%; and
the modified mixed-plastic-polyethylene recycling blend (modified PERB) has
a) a modified melt flow rate MFRs (ISO 1133, 190 °C, 5 kg) in the range of from 0.5 to 5.0 g/10 min,
b) a modified melt flow rate MFRs (ISO 1133, 190 °C, 5 kg), wherein the ratio MFRs(modified PERB)/MFRs(PERB) is less than 1.00,
c) a density (ASTM D 792) in the range of from 915 to 939 kg/m³, and
d) a relative xylene hot insoluble content (R_{XHU}) in the range of from 0.05 to 1.00, determined as described in the specification and indicated as ${R}_{XHU} = 1 - \frac{XHU \left(modified PERB\right)}{XHU \left(PERB\right)} ,$ wherein XHU(modified PERB) is the xylene hot insoluble content of the modified mixed-plastic-polyethylene recycling blend (modified PERB) and XHU(PERB) is the xylene hot insoluble content of the mixed-plastic-polyethylene recycling blend (PERB), and optionally has
e) a xylene hot insoluble content (XHU), determined as described in the specification, in the range of from 0.05 to 1.00 wt.-%.

12. A film comprising the modified mixed-plastic-polyethylene recycling blend (modified PERB) according to claim 10 or 11, wherein the film is preferably a packaging film.

13. The film according to claim 12, wherein the film is **characterized by** at least one, preferably all, of the following properties, determined on a 40 µm test blown film:
a) a Tensile Modulus (TM) in machine direction (MD) (ISO 527-3, 23 °C) of at least 200 MPa, preferably in the range of from 200 to 400 MPa,
b) a Tensile Modulus (TM) in transverse direction (TD) (ISO 527-3, 23 °C) of at least 250 MPa, preferably in the range of from 250 to 500 MPa, and
c) a thickness distribution of less than 9 %, determined as described in the specification.

14. Use of a film according to claim 12 or 13 as packaging material, preferably for non-food products.

15. Use of a poly(n)functional acrylate compound with n ≥ 2 for reducing the content of crosslinked material, determined as described in the specification, of a mixed-plastic-polyethylene recycling blend (PERB) having
i.1) a melt flow rate MFRs (ISO 1133, 190 °C, 5 kg) in the range of from 0.5 to 10.0 g/10 min,
i.2) a ratio of melt flow rates MFR₂₁/MFR₅ (ISO 1133, 190 °C, 21.6 kg and 5 kg) of more than 10,
i.3) a density (ASTM D 792) in the range of from 915 to 939 kg/m³, and
i.4) a total amount of ethylene units (C₂ units), based on the total weight of monomer units in the mixed-plastic-polyethylene recycling blend (PERB) and measured according to quantitative ¹³C{¹H} **NMR** as described in the specification, in the range of from 80.0 to 96.0 wt.-%, preferably, wherein 100 to 10,000 ppm, relative to the total weight of the mixed-plastic-polyethylene recycling blend (PERB), of the poly(n)functional acrylate compound are used.

## Patentansprüche

1. Verfahren zum Modifizieren einer Mischkunststoff-Polyethylen-Recyclingmischung, das die folgenden Schritte umfasst:
I) Vorsehen einer Mischkunststoff-Polyethylen-Recyclingmischung (Polyethylen Recycling Blend bzw. PERB), die aufweist:
i.1) eine Schmelzflussrate MFR₅ (ISO 1133, 190 °C, 5 kg) im Bereich von 0,5 bis 10,0 g/10 min,
i.2) ein Verhältnis der Schmelzflussraten MFR₂₁/MFR₅ (ISO 1133, 190 °C, 21,6 kg und 5kg) von mehr als 10,
i.3) eine Dichte (ASTM D 792) im Bereich von 915 bis 939 kg/m³, und
i.4) eine Gesamtmenge von Ethyleneinheiten (C₂-Einheiten), basierend auf dem Gesamtgewicht von Monomer-Einheiten in der Mischkunststoff-Polyethylen-Recyclingmischung (PERB) und gemessen gemäß einer quantitativen ¹³C{¹H}-NMR wie in der Beschreibung beschrieben, im Bereich von 80,0 bis 96,0 Gew.-%,
(II) Hinzufügen von 100 bis 10.000 ppm einer poly(n)funktionalen Acrylatverbindung mit n ≥ 2 relativ zu dem Gesamtgewicht der Mischkunststoff-Polyethylen-Recyclingmischung (PERB), und
(III) Verbinden der Mischkunststoff-Polyethylen-Recyclingmischung (PERB) und der poly(n)funktionalen Acrylatverbindung, um eine modifizierte Mischkunststoff-Polyethylen-Recyclingmischung (eine modifizierte PERB) zu erhalten,
wobei die modifizierte Mischkunststoff-Polyethylen-Recyclingmischung (modifizierte PERB) einen relativen in heißem Xylol unlöslichen Anteil (R_{XHU}) im Bereich von 0,05 bis 1,00, bestimmt wie in der Beschreibung beschrieben und wie folgt angegeben aufweist: ${R}_{XHU} = 1 - \frac{XHU \left(modifizierte PERB\right)}{XHU \left(PERB\right)} ,$
wobei XHU(modifizierte PERB) der in heißem Xylol unlösliche Anteil der modifizierten Mischkunststoff-Polyethylen-Recyclingmischung (modifizierten PERB) ist und XHU(PERB) der in heißem Xylol unlösliche Anteil der in Schritt (I) vorgesehenen Mischkunststoff-Polyethylen-Recyclingmischung (PERB) ist.

2. Verfahren nach Anspruch 1, wobei die modifizierte Mischkunststoff-Polyethylen-Recyclingmischung (modifizierte PERB) wenigstens eine und vorzugsweise alle der Eigenschaften a) bis c) aufweist:
a) eine modifizierte Schmelzflussrate MFR₅ (ISO 1133, 190 °C, 5 kg) im Bereich von 0,5 bis 5,0 g/10 min,
b) eine modifizierte Schmelzflussrate MFR₅ (ISO 1133, 190 °C, 5 kg), wobei das Verhältnis MFR₅(modifizierte PERB)/MFR₅(PERB) kleiner als 1,00 ist, und
c) eine Dichte (ASTM D 792) im Bereich von 915 bis 939 kg/m³.

3. Verfahren nach einem der vorstehenden Ansprüche, wobei die Mischkunststoff-Polyethlen-Recyclingmischung (PERB) ein Verhältnis der Schmelzflussraten MFR₂₁/MFR₅ (ISO 1133, 190 °C, 21,6 kg und 5 kg) im Bereich von 11 bis 30, vorzugsweise von 12 bis 25 und/oder eine Dichte (ASTM D 792) im Bereich von 918 bis 935 kg/m³, vorzugsweise 920 bis 930 kg/m³ und/oder eine Schmelzflussrate MFR₂ (ISO 1133, 190 °C, 2,16 kg) im Bereich von 0,1 bis 1,5 g/10 min aufweist.

4. Verfahren nach einem der vorstehenden Ansprüche, wobei die Mischkunststoff-Polyethylen-Recyclingmischung (PERB), basierend auf dem Gesamtgewicht von Monomereinheiten in der Mischkunststoff-Polyethylen-Recyclingmischung (PERB) und gemessen gemäß einer quantitativen ¹³C{¹H}-NMR wie in der Beschreibung beschrieben, umfasst:
a) eine Gesamtmenge von Ethyleneinheiten (C₂-Einheiten) im Bereich von 80,0 bis 96,0 Gew.-%, vorzugsweise von 82,5 bis 95,5 Gew.-%, besser von 85,0 bis 95,5 Gew.-% und am besten von 87,5 bis 95,0 Gew.-%, und
b) eine Gesamtmenge von kontinuierlichen Einheiten mit 3 Kohlenstoffen in Entsprechung zu Polypropylen (kontinuierliche C₃-Einheiten) im Bereich von 0,2 bis 6,5 Gew.-%, vorzugsweise von 0,4 bis 6,0 Gew.-%, besser von 0,6 bis 5,5 Gew.-% und am besten von 0,75 bis 5,0 Gew.-%.

5. Verfahren nach einem der vorstehenden Ansprüche, wobei die Mischkunststoff-Polyethylen-Recyclingmischung (PERB) wenigstens eines und vorzugsweise alle der Merkmale a) bis e) basierend auf dem Gesamtgewicht von Monomereinheiten in der Mischkunststoff-Polyethylen-Recyclingmischung (PERB) und gemessen gemäß einer quantitativen ¹³C{¹H}-NMR wie in der Beschreibung beschrieben, aufweist:
a) eine Gesamtmenge von Einheiten mit 3 Kohlenstoffatomen als isolierte C₃-Einheiten (isolierte C₃-Einheiten) im Bereich von 0,00 bis 0,50 Gew.-%, vorzugsweise von 0,00 bis 0,40 Gew.-%, besser von 0,00 bis 0,30 Gew.-% und am besten von 0,00 bis 0,25 Gew.-%,
b) eine Gesamtmenge von Einheiten mit 4 Kohlenstoffatomen (C₄-Einheiten) im Bereich von 0,50 bis 5,00 Gew.-%, vorzugsweise von 0,75 bis 4,00 Gew.-%, besser von 1,00 bis 3,50 Gew.-% und am besten von 1,25 bis 3,00 Gew.-%,
c) eine Gesamtmenge von Einheiten mit 6 Kohlenstoffatomen (C₆-Einheiten) im Bereich von 0,50 bis 7,50 Gew.-%, vorzugsweise von 0,75 bis 6,50 Gew.-%, besser von 1,00 bis 5,50 Gew.-% und am besten von 1,25 bis 5,00 Gew.-%,
d) eine Gesamtmenge von Einheiten mit 7 Kohlenstoffatomen (C₇-Einheiten) im Bereich von 0,20 bis 2,50 Gew.-%, vorzugsweise von 0,30 bis 2,00 Gew.-%, besser von 0,40 bis 1,50 Gew.-% und am besten von 0,45 bis 1,25 Gew.-%, und
e) einen LDPE-Anteil im Bereich von 20,0 bis 65, 0 Gew.-%, vorzugsweise von 25,0 bis 62,5 Gew.-%, besser von 30,0 bis 60,0 Gew.-% und am besten von 32,0 bis 55,0 Gew.-%.

6. Verfahren nach einem der vorstehenden Ansprüche, wobei in dem Schritt (II) von 500 bis 8.000 ppm, vorzugsweise von 800 bis 6.000 ppm und besser von 1.000 bis 5.000 ppm der poly(n)funktionalen Acrylatverbindung relativ zu dem Gesamtgewicht der Mischkunststoff-Polyethylen-Recyclingmischung (PERB) hinzugefügt werden.

7. Verfahren nach einem der vorstehenden Ansprüche, wobei die poly(n)funktionale Acrylatverbindung ein Di- oder Tri(meth)acrylat ist, das aus der Gruppe ausgewählt ist, die aus 1,4-Butandiol-dimethacrylat (BDDMA), 1,6-Hexandiol-dimethacrylat (HDDMA), 1,3-Butyleglycol-dimethacrylat (BGDMA), Ethylenglycol-dimethacrylat (EGDMA), Dodecandiol-dimethacrylat (DDDMA), Trimethylolpropan-trimethacrylat (TMPTMA), Trimethylolpropan-triacrylat (TMPTA) und Kombinationen von diesen besteht, und ist vorzugsweise Trimethylolpropan-trimethacrylat (TMPTMA) und/oder Trimethylolpropan-triacrylat (TMPTA).

8. Verfahren nach einem der vorstehenden Ansprüche, wobei das Verbinden in Schritt (III) bei einer Temperatur im Bereich von 150 bis 250 °C, vorzugsweise von 160 bis 240 °C, besser von 165 bis 230 °C und am besten von 170 bis 225 °C und vorzugsweise mittels einer Extrusion durchgeführt wird.

9. Verfahren nach einem der vorstehenden Ansprüche, wobei das Verhältnis MFR₅(modifizierte PERB)/MFR₅(PERB) im Bereich von 1,10 bis 0,99, vorzugsweise von 0,30 bis 0,98, besser von 0,50 bis 0,97 liegt und/oder der relative in heißem Xylol unlösliche Anteil (R_{XHU}) der modifizierten Mischkunststoff-Polyethylen-Recyclingmischung (modifizierten PERB) im Bereich von 0,10 bis 0,80 und vorzugsweise von 0,15 bis 0,70 liegt.

10. Modifizierte Mischkunststoff-Polyethylen-Recyclingmischung (modifizierte PERB), die durch das Verfahren gemäß einem der vorstehenden Ansprüche erhalten wird.

11. Modifizierte Mischkunststoff-Polyethylen-Recyclingmischung (modifizierte PERB), die erhalten wird durch das Verbinden einer Mischkunststoff-Polyethylen-Recyclingmischung (PERB) und 100 bis 10.000 ppm einer poly(n)funktionalen Acrylatverbindung mit n ≥ 2 relativ zu dem Gesamtgewicht der Mischkunststoff-Polyethylen-Recyclingmischung (PERB), um eine modifizierte Mischkunststoff-Polyethylen-Recyclingmischung (modifizierte PERB) zu erhalten,
wobei die Mischkunststoff-Polyethylen-Recyclingmischung (PERB) aufweist:
i.1) eine Schmelzflussrate MFR₅ (ISO 1133, 190 °C, 5 kg) im Bereich von 0,5 bis 10,0 g/10 min,
i.2) ein Verhältnis der Schmelzflussraten MFR₂₁/MFR₅ (ISO 1133, 190 °C, 21,6 kg und 5 kg) von mehr als 10,
i.3) eine Dichte (ASTM D 792) im Bereich von 915 bis 939 kg/m³, und
i.4) eine Gesamtmange von Ethyleneinheiten (C₂-Einheiten), basierend auf dem Gesamtgewicht von Monomereinheiten in der Mischkunststoff-Polyethylen-Recyclingmischung (PERB) und gemessen gemäß einer quantitativen ¹³{¹H}-NMR wie in der Beschreibung beschrieben, im Bereich von 80,0 bis 96,0 Gew.-%, und
wobei die modifizierte Mischkunststoff-Polyethylen-Recyclingmischung (modifizierte PERB) aufweist:
a) eine modifizierte Schmelzflussrate MFR₅ (ISO 1133, 190 °C, 5 kg) im Bereich von 0,5 bis 5,0 g/10 min,
b) eine modifizierte Schmelzflussrate MFR₅ (ISO 1133, 190 °C, 5 kg), wobei das Verhältnis MFR₅(modifizierte PERB)/MFR₅(PERB) kleiner als 1,00 ist,
c) eine Dichte (ASTM D 792) im Bereich von 915 bis 939 kg/m³, und
d) einen relativen in heißem Xylol unlöslichen Anteil (R_{XHU}) im Bereich von 0,05 bis 1,00, bestimmt wie in der Beschreibung beschrieben und wie folgt angegeben: ${R}_{XHU} = 1 - \frac{XHU \left(modifizierte PERB\right)}{XHU \left(PERB\right)}$ wobei XHU(modifizierte PERB) der in heißem Xylol unlösliche Anteil der modifizierten Mischkunststoff-Polyethylen-Recyclingmischung (modifizierten PERB) ist und XHU(PERB) der in heißem Xylol unlösliche Anteil der Mischkunststoff-Polyethylen-Recyclingmischung (PERB) ist,
und optional aufweist:
e) einen in heißem Xylol unlöslichen Anteil (XHU), bestimmt wie in der Beschreibung beschrieben, im Bereich von 0,05 bis 1,00 Gew.-%.

12. Folie, die die modifizierte Mischkunststoff-Polyethylen-Recyclingmischung (modifizierte PERB) gemäß Anspruch 10 oder 11 aufweist, wobei die Folie vorzugsweise eine Verpackungsfolie ist.

13. Folie nach Anspruch 12, wobei die Folie durch wenigstens eine und vorzugsweise alle die folgenden Eigenschaften, bestimmt an einer 40 µm-Testblasfolie, aufweist:
a) ein Zugmodul in der Maschinenrichtung (ISO 527-3, 23 °C) von wenigstens 200 MPa, vorzugsweise im Bereich von 200 bis 400 MPa,
b) ein Zugmodul in der Querrichtung (ISO 527-3, 23 °C) von wenigstens 250 MPa, vorzugsweise im Bereich von 250 bis 500 MPa, und
c) eine Dickenverteilung von weniger als 9%, bestimmt wie in der Beschreibung beschrieben.

14. Verwendung einer Folie gemäß Anspruch 12 oder 13 als ein Verpackungsmaterial, vorzugsweise für nicht-Lebensmittelprodukte.

15. Verwendung einer poly(n)funktionalen Acrylatverbindung mit n ≥ 2 für das Reduzieren des Anteils eines vernetzten Materials, bestimmt wie in der Beschreibung beschrieben, einer Mischkunststoff-Polyethylen-Recyclingmischung (PERB), die aufweist:
i.1) eine Schmelzflussrate MFR₅ (ISO 1133, 190 °C, 5 kg) im Bereich von 0,5 bis 10,0 g/10 min,
i.2) ein Verhältnis der Schmelzflussraten MFR₂₁/MFR₅ (ISO 1133, 190 °C, 21,6 kg und 5kg) von mehr als 10,
i.3) eine Dichte (ASTM D 792) im Bereich von 915 bis 939 kg/m³, und
i.4) eine Gesamtmenge von Ethyleneinheiten (C₂-Einheiten), basierend auf dem Gesamtgewicht von Monomer-Einheiten in der Mischkunststoff-Polyethylen-Recyclingmischung (PERB) und gemessen gemäß einer quantitativen ¹³C{¹H}-NMR wie in der Beschreibung beschrieben, im Bereich von 80,0 bis 96,0 Gew.-%,
wobei vorzugsweise 100 bis 10.000 ppm, relativ zu dem Gesamtgewicht der Mischkunststoff-Polyethylen-Recyclingmischung (PERB), der poly(n)funktionalen Acrylatverbindung verwendet werden.

## Revendications

1. Procédé de modification d'un mélange de recyclage de polyéthylène à base de plastiques mélangés comprenant les étapes suivantes :
I) fournir un mélange de recyclage de polyéthylène à base de plastiques mélangés (PERB) ayant
i.1) un indice de fluidité à chaud MFR₅ (ISO 1133, 190 °C, 5 kg) dans la plage de 0,5 à 10,0 g/10 min,
i.2) un rapport d'indices de fluidité à chaud MFR₂₁/MFR₅ (ISO 1133, 190 °C, 21,6 kg et 5 kg) de plus de 10,
i.3) une masse volumique (ASTM D 792) dans la plage de 915 à 939 kg/m³, et
i.4) une quantité totale de motifs éthylène (motifs C₂), par rapport au poids total des motifs monomères dans le mélange de recyclage de polyéthylène à base de plastiques mélangés (PERB) et mesurée par RMN ¹³C{¹H} quantitative comme détaillé dans la description, dans la plage de 80,0 à 96,0 % en poids,
(II) ajouter 100 à 10 000 ppm d'un composé acrylate poly(n)fonctionnel avec n ≥ 2, par rapport au poids total du mélange de recyclage de polyéthylène à base de plastiques mélangés (PERB), et
(III) compounder le mélange de recyclage de polyéthylène à base de plastiques mélangés (PERB) et le composé acrylate poly(n)fonctionnel pour obtenir un mélange de recyclage de polyéthylène à base de plastiques mélangés modifié (PERB modifié),
dans lequel le mélange de recyclage de polyéthylène à base de plastiques mélangés modifié (PERB MODIFIE) a un contenu insoluble à chaud dans le xylène relatif (R_{XHU}) dans la plage de 0,05 à 1,00, déterminé comme décrit dans la spécification et indiqué en tant que ${R}_{XHU} = 1 - \frac{XHU \left(PERB modifié\right)}{XHU \left(PERB\right)}$
dans lequel XHU(PERB modifié) est le contenu insoluble à chaud dans le xylène du mélange de recyclage de polyéthylène à base de plastiques mélangés modifié (PERB modifié) et XHU(PERB) est le contenu insoluble à chaud dans le xylène du mélange de recyclage de polyéthylène à base de plastiques mélangés (PERB) fourni dans l'étape (I).

2. Procédé selon la revendication 1, dans lequel le mélange de recyclage de polyéthylène à base de plastiques mélangés modifié (PERB modifié) a au moins une, de préférence toutes, les propriétés a) à c) :
a) un indice modifié de fluidité à chaud MFR₅ (ISO 1133, 190 °C, 5 kg) dans la plage de 0,5 à 5,0 g/10 min,
b) un indice modifié de fluidité à chaud MFR₅ (ISO 1133, 190 °C, 5 kg), dans lequel le rapport MFR₅(PERB modifié)/MFR₅(PERB) est inférieur à 1,00, et
c) une masse volumique (ASTM D 792) dans la plage de 915 à 939 kg/m³.

3. Procédé selon l'une quelconque des revendications précédentes, dans lequel le mélange de recyclage de polyéthylène à base de plastiques mélangés (PERB) a un rapport d'indices de fluidité à chaud MFR₂₁/MFR₅ (ISO 1133, 190 °C, 21,6 kg et 5 kg) dans la plage de 11 à 30, de préférence de 12 à 25, et/ou une masse volumique (ASTM D 792) dans la plage de 918 à 935 kg/m³, de préférence de 920 à 930 kg/m³, et/ou un indice de fluidité à chaud MFR₂ (ISO 1133, 190 °C, 2,16 kg) dans la plage de 0,1 à 1,5 g/10 min.

4. Procédé selon l'une quelconque des revendications précédentes, dans lequel le mélange de recyclage de polyéthylène à base de plastiques mélangés (PERB) comprend, par rapport au poids total de motifs monomères dans le mélange de recyclage de polyéthylène à base de plastiques mélangés (PERB) et mesurées par une RMN ¹³C{¹H} quantitative comme détaillé dans la description,
a) une quantité totale de motifs éthylène (motifs C₂) dans la plage de 80,0 à 96,0 % en poids, de préférence de 82,5 à 95,5 % en poids, plus préférentiellement de 85,0 à 95,5 % en poids et le plus préférentiellement de 87,5 à 95,0 % en poids, et
b) une quantité totale de motifs continus ayant 3 atomes de carbone correspondant au polypropylène (motifs C₃ continus) dans la plage de 0,2 à 6,5 % en poids, de préférence de 0,4 à 6,0 % en poids, plus préférentiellement de 0,6 à 5,5 % en poids et le plus préférentiellement de 0,75 à 5,0 % en poids.

5. Procédé selon l'une quelconque des revendications précédentes, dans lequel le mélange de recyclage de polyéthylène à base de plastiques mélangés (PERB) comprend au moins une, de préférence toutes, les caractéristiques a) à e), par rapport au poids total de motifs monomères dans le mélange de recyclage de polyéthylène à base de plastiques mélangés (PERB) et mesurées conformément à une RMN ¹³C{¹H} quantitative comme détaillé dans la description,
a) une quantité totale de motifs ayant 3 atomes de carbone en tant que motifs C₃ isolés (motifs C₃ isolés) dans la plage de 0,00 à 0,50 % en poids, de préférence de 0,00 à 0,40 % en poids, plus préférentiellement de 0,00 à 0,30 % en poids et le plus préférentiellement de 0,00 à 0,25 % en poids,
b) une quantité totale de motifs ayant 4 atomes de carbone (motifs C₄) dans la plage de 0,50 à 5,00 % en poids, de préférence de 0,75 à 4,00 % en poids, encore plus préférentiellement de 1,00 à 3,50 % en poids et le plus préférentiellement de 1,25 à 3,00 % en poids,
c) une quantité totale de motifs ayant 6 atomes de carbone (motifs C₆) dans la plage de 0,50 à 7,50 % en poids, de préférence de 0,75 à 6,50 % en poids, plus préférentiellement de 1,00 à 5,50 % en poids et le plus préférentiellement de 1,25 à 5,00 % en poids,
d) une quantité totale de motifs ayant 7 atomes de carbone (motifs C₇) dans la plage de 0,20 à 2,50 % en poids, de préférence de 0,30 à 2,00 % en poids, plus préférentiellement de 0,40 à 1,50 % en poids et le plus préférentiellement de 0,45 à 1,25 % en poids, et
a) une teneur en LDPE dans la plage de 20,0 à 65,0 % en poids, de préférence de 25,0 à 62,5 % en poids, plus préférentiellement de 30,0 à 60,0 % en poids et le plus préférentiellement de 32,0 à 55,0 % en poids.

6. Procédé selon l'une quelconque des revendications précédentes, dans lequel dans l'étape (II) de 500 à 8000 ppm, de préférence de 800 à 6000 ppm et plus préférentiellement de 1000 à 5000 ppm, du composé acrylate poly(n)fonctionnel, par rapport au poids total du mélange de recyclage de polyéthylène à base de plastiques mélangés (PERB), sont ajoutés.

7. Procédé selon l'une quelconque des revendications précédentes, dans lequel le composé acrylate poly(n)fonctionnel est un di- ou un tri-(méth)acrylate choisi dans le groupe constitué par le diméthacrylate de 1,4-butanediol (BDDMA), le diméthacrylate de 1,6-hexanediol (HDDMA), le diméthacrylate de 1,3-butylèneglycol (BGDMA), le diméthacrylate d'éthylèneglycol (EGDMA), le diméthacrylate de dodécanediol (DDDMA), le triméthacrylate de triméthylolpropane (TMPTMA), le triacrylate de tri-méthylolpropane (TMPTA) et les combinaisons de ceux-ci, et est de préférence le triméthacrylate de triméthylolpropane (TMPTMA) et/ou le triacrylate de triméthylolpropane (TMPTA).

8. Procédé selon l'une quelconque des revendications précédentes, dans lequel le compoundage de l'étape (III) est mis en œuvre à une température dans la plage de 150 à 250 °C, de préférence de 160 à 240 °C, plus préférentiellement de 165 à 230 °C et le plus préférentiellement de 170 à 225 °C, et de préférence par extrusion.

9. Procédé selon l'une quelconque des revendications précédentes, dans lequel le rapport MFR₅ (PERB MODIFIE)/MFR₅ (PERB) est dans la plage de 0,10 à 0,99, de préférence de 0,30 à 0,98 et plus préférentiellement de 0,50 à 0,97, et/ou le contenu insoluble à chaud dans le xylène relatif (R_{XHU}) du mélange de recyclage de polyéthylène à base de plastiques mélangés modifié (PERB MODIFIE) est dans la plage de 0,10 à 0,80, de préférence de 0,15 à 0,70.

10. Mélange de recyclage de polyéthylène à base de plastiques mélangés modifié (PERB modifié) obtenu par le procédé selon l'une quelconque des revendications précédentes.

11. Mélange de recyclage de polyéthylène à base de plastiques mélangés modifié (PERB modifié) obtenu en compoundant un mélange de recyclage de polyéthylène à base de plastiques mélangés (PERB) et de 100 à 10 000 ppm d'un composé acrylate poly(n)fonctionnel avec n ≥ 2, par rapport au poids total du mélange de recyclage de polyéthylène à base de plastiques mélangés (PERB), pour obtenir un mélange de recyclage de polyéthylène à base de plastiques mélangés modifié (PERB modifié), dans lequel
le mélange de recyclage de polyéthylène à base de plastiques mélangés (PERB) a
i.1) un indice de fluidité à chaud MFR₅ (ISO 1133, 190 °C, 5 kg) dans la plage de 0,5 à 10,0 g/10 min,
i.2) un rapport d'indices de fluidité à chaud MFR₂₁/MFR₅ (ISO 1133, 190 °C, 21,6 kg et 5 kg) de plus de 10,
i.3) une masse volumique (ASTM D 792) dans la plage de 915 à 939 kg/m³, et
i.4) une quantité totale de motifs éthylène (motifs C₂), par rapport au poids total des motifs monomères dans le mélange de recyclage de polyéthylène à base de plastiques mélangés (PERB) et mesurée par RMN ¹³C{¹H} quantitative comme détaillé dans la description, dans la plage de 80,0 à 96,0 % en poids ; et
le mélange de recyclage de polyéthylène à base de plastiques mélangés modifié (PERB modifié) a
a) un indice modifié de fluidité à chaud MFR₅ (ISO 1133, 190 °C, 5 kg) dans la plage de 0,5 à 5,0 g/10 min,
b) un indice modifié de fluidité à chaud MFR₅ (ISO 1133, 190 °C, 5 kg), dans lequel le rapport MFR₅(PERB modifié)/MFR₅(PERB) est inférieur à 1,00,
c) une masse volumique (ASTM D 792) dans la plage de 915 à 939 kg/m³, et
d) un contenu insoluble à chaud dans le xylène relatif (R_{XHU}) dans la plage de 0,05 à 1,00, déterminé comme décrit dans la spécification et indiqué en tant que ${R}_{XHU} = 1 - \frac{XHU \left(PERB modifié\right)}{XHU \left(PERB\right)}$ dans lequel XHU(PERB modifié) est le contenu insoluble à chaud dans le xylène du mélange de recyclage de polyéthylène à base de plastiques mélangés modifié (PERB modifié) et XHU(PERB) est le contenu insoluble à chaud dans le xylène du mélange de recyclage de polyéthylène à base de plastiques mélangés (PERB), et éventuellement a
e) un contenu insoluble à chaud dans le xylène (XHU), déterminé comme décrit dans la spécification, dans la plage de 0,05 à 1,00 % en poids.

12. Film comprenant le mélange de recyclage de polyéthylène à base de plastiques mélangés modifié (PERB modifié) selon la revendication 10 ou 11, dans lequel le film est de préférence un film d'emballage.

13. Film selon la revendication 12, dans lequel le film est **caractérisé par** au moins une, préférentiellement toutes, les propriétés suivantes, déterminées sur un film soufflé d'essai de 40 µm :
a) un module de traction (MT) dans la direction de la machine (DM) (ISO 527-3, 23 °C) d'au moins 200 MPa, de préférence dans la plage de 200 à 400 MPa,
b) un module de traction (MT) dans la direction transversale (DT) (ISO 527-3, 23 °C) d'au moins 250 MPa, de préférence dans la plage de 250 à 500 MPa, et
c) une distribution d'épaisseur de moins de 9 %, déterminée comme détaillé dans la description.

14. Utilisation d'un film selon la revendication 12 ou 13 en tant que matériau d'emballage, de préférence pour des produits non alimentaires.

15. Utilisation d'un composé acrylate poly(n)fonctionnel avec n ≥ 2 pour réduire la teneur en matériau réticulé, déterminée comme détaillé dans la description, d'un mélange de recyclage de polyéthylène à base de plastiques mélangés (PERB) ayant
i.1) un indice de fluidité à chaud MFR₅ (ISO 1133, 190 °C, 5 kg) dans la plage de 0,5 à 10,0 g/10 min,
i.2) un rapport d'indices de fluidité à chaud MFR₂₁/MFR₅ (ISO 1133, 190 °C, 21,6 kg et 5 kg) de plus de 10,
i.3) une masse volumique (ASTM D 792) dans la plage de 915 à 939 kg/m³, et
i.4) une quantité totale de motifs éthylène (motifs C₂), par rapport au poids total des motifs monomères dans le mélange de recyclage de polyéthylène à base de plastiques mélangés (PERB) et mesurée par RMN ¹³C{¹H} quantitative comme détaillé dans la description, dans la plage de 80,0 à 96,0 % en poids,
de préférence, dans lequel 100 à 10 000 ppm, par rapport au poids total du mélange de recyclage de polyéthylène à base de plastiques mélangés (PERB), du composé acrylate poly(n)fonctionnel sont utilisés.
